# EUROPÄISCHE PATENTSCHRIFT

(11) **EP 3 333 463 B1**
(45) Veröffentlichungstag und Bekanntmachung des Hinweises auf die Patenterteilung: **19.08.2020**
(21) Anmeldenummer: 17001890.7
(22) Anmeldetag: 20.11.2017
(51) Int. Cl.: F16H 63/34

(54) **ELEKTRISCHER PARKSPERRENAKTUATOR ZUR BETÄTIGUNG EINER PARKSPERRE IN EINEM KRAFTFAHRZEUG**
ELECTRICAL PARKING LOCK ACTUATOR FOR A CAR
ACTUATEUR POUR UN BARRAGE EN GARRENT POUR UNE VOITURE

(30) Priorität: 07.12.2016 DE 102016014523
(43) Veröffentlichungstag der Anmeldung: 13.06.2018
(73) Patentinhaber: FTE automotive GmbH, 96106 Ebern (DE)
(72) Erfinder: Heubner, Wilhelm, D-96274 Itzgrund (DE); Lenke, Sonja, D-97514 Oberaurach/Oberschleichach (DE); Ebert, Katrin, D-97461 Hofheim (DE)
(74) Vertreter: Oppermann, Mark

(56) Entgegenhaltungen:
- DE-A1-102010 027 826
- DE-A1-102015 206 156
- DE-A1-102015 206 157

## Beschreibung

### TECHNISCHES GEBIET

Die vorliegende Erfindung bezieht sich auf einen elektrischen Parksperrenaktuator zur Betätigung einer Parksperre in einem Kraftfahrzeug gemäß dem Oberbegriff des Patentanspruchs 1. Insbesondere bezieht sich die Erfindung auf einen elektrischen Parksperrenaktuator, wie sie neuerdings in Kraftfahrzeugen mit elektrischen Antriebsachsen, Hybrid-Getrieben und modernen Getrieben mit Automat-Charakter (automatisierten Schaltgetrieben) in großem Umfang in der Automobilindustrie zum Einsatz kommen.

### STAND DER TECHNIK

Parksperren werden insbesondere dann benötigt, wenn eine selbsthemmende Wirkung des Antriebs(motors) zum Festhalten des Kraftfahrzeugs nicht genutzt werden kann. Eine Sperrung des Antriebsstrangs erfolgt dann in der Regel über ein auf einer Ausgangswelle des Getriebes drehfest angeordnetes, eine Verzahnung aufweisendes Parksperrenrad, das mittels einer auf einer parallelen Achse schwenkbar gelagerten Parksperrenklinke an der Verzahnung formschlüssig verriegelt werden kann, wobei die Parksperrenklinke entgegen der Kraft einer Rückstellfeder verschwenkt werden muss, welche die Parksperrenklinke vom Parksperrenrad weg in eine entsperrte Stellung vorspannt. Hierfür können neben hydraulischen auch elektrische Parksperrenaktuatoren zum Einsatz kommen, die dazu dienen, eine Linearbewegung zu erzeugen, über die ein Betätigungselement z.B. in der Form eines Nockens oder eines Konus gegen die Parksperrenklinke bewegbar ist, um diese zu verschwenken. Um sicherzustellen, dass die Parksperre auch dann ein Wegrollen des Kraftfahrzeugs verhindert, wenn die Parksperrenklinke beim Betätigen gegen einen Zahn des Parksperrenrads zur Anlage kommt, ohne mit der Verzahnung in Formschluss zu gelangen, ist ferner am Betätigungselement ein Energiespeicher (Nachrückfeder) vorgesehen, der im Falle eines Rollens des Kraftfahrzeugs über das Betätigungselement die Parksperrenklinke nachrückt, so dass diese mit der Verzahnung des Parksperrenrads in Eingriff gelangt. Darüber hinaus ist ein Notbetätigungsmechanismus vorzusehen, der bei einem Ausfall des Aktuators ein Einlegen der Parksperre ermöglicht.

Im Stand der Technik fehlt es nicht an Vorschlägen, diese Funktionen an einem elektrischen Parksperrenaktuator zu realisieren. So wird in der Druckschrift US 5,704,457 eine elektrische Betätigungsvorrichtung für eine Parksperre offenbart, deren Parksperrenklinke auf ihrer vom Parksperrenrad abgewandten Seite eine Nockenfläche aufweist, gegen die zum Verschwenken der Parksperrenklinke eine Andrückrolle der Betätigungsvorrichtung zur Anlage gebracht werden kann. Die Andrückrolle ist an einem Ende eines auf einer Achse drehbar gelagerten Andrückhebels angebracht, der mit einem auf derselben Achse drehbar gelagerten Steuerhebel über eine Drehfeder als Energiespeicher (Nachrückfeder) wirkverbunden ist. Der Steuerhebel kann zur Betätigung der Parksperre über eine Pleuelstange verschwenkt werden, die mittels eines Getriebemechanismus axial verlagerbar ist, welcher eine Exzenterscheibe, an der die Pleuelstange angelenkt ist, und zum Drehen der Exzenterscheibe ein mehrstufiges Stirnradgetriebe umfasst, welches seinerseits mittels eines Elektromotors angetrieben werden kann. Im Stirnradgetriebe ist ein erster Freilauf vorgesehen, der neben der elektromotorischen auch eine manuelle Betätigung des Getriebemechanismus ermöglicht. Der Getriebemechanismus lässt sich folglich zum elektromotorischen Ein- und Auslegen der Parksperre nur in einer Drehrichtung des Elektromotors antreiben. Um die im eingelegten Zustand der Parksperre wirkenden Kräfte der Rückstellfeder an der Parksperrenklinke und der Drehfeder (Nachrückfeder) zwischen Andrückhebel und Steuerhebel aufzunehmen, ist an der Exzenterscheibe ein zweiter Freilauf vorgesehen, der ein Zurückdrehen der Exzenterscheibe verhindert.

Im Falle eines Ausfalls des Elektromotors kann die Exzenterscheibe zur Betätigung der Parksperre mittels eines manuellen Betätigungsmechanismus verdreht werden, der mehrere Hebel und einen Seilzug umfasst.

Ein Nachteil dieses Stands der Technik ist in dem im Verhältnis komplexen Aufbau der Betätigungsvorrichtung zu sehen. Wünschenswert wäre es zudem, wenn im Falle eines Ausfalls des Elektromotors eine Notbetätigung der Parksperre mit gespeicherter Energie erfolgen könnte.

Eine solche Parksperrenanordnung ist beispielsweise aus der den Oberbegriff des Patentanspruchs 1 bildenden Druckschrift DE 10 2010 054 911 A1 bekannt. Bei dieser Parksperrenanordnung erfolgt in einem Normalbetrieb die Betätigung der Parksperre durch eine mittels eines Elektromotors erzeugte, über ein Stirnradgetriebe übertragene Drehbewegung, die mithilfe eines Kulissenelements in eine translatorische Bewegung umgewandelt und auf eine mittels eines Federelements in Richtung Sperren vorgespannte Zugstange übertragen wird. Die translatorische Bewegung der Zugstange wirkt auf ein Betätigungselement mit einer Schrägfläche (Konus), das zur Betätigung der Parksperrenklinke vorgesehen ist. Genauer gesagt erfolgt bei diesem Stand der Technik die axiale Zustellung der gegen ein Verdrehen gesicherten Zugstange über einen mit der Zugstange verbundenen Kulissenstein, der in einer Kulissenbahn des mittels des getriebeuntersetzten Elektromotors antreibbaren Kulissenelements geführt ist. Dabei befindet sich die der Entsperrstellung zugeordnete Endlage der Kulissenbahn hinter einem oberen Totpunkt der Kulissenbahn, die folglich in diesem Bereich eine negative Steigung aufweist, wodurch die über das Federelement vorgespannte Zugstange am Kulissenelement in der Entsperrstellung gesperrt ist. Zum Erreichen der Sperrstellung der Zugstange wird das Kulissenelement mittels des Elektromotors verdreht, wobei der Kulissenstein den oberen Totpunkt der Kulissenbahn überfährt und sich in der Folge die Zugstange mit Unterstützung des Federelements in die Sperrstellung bewegt bis der Kulissenstein eine untere Endlage in der Kulissenbahn erreicht. Aus dieser unteren Endlage in der Kulissenbahn kann der Kulissenstein - und damit die Zugstange aus ihrer Sperrstellung - nur durch eine Drehrichtungsumkehr des Elektromotors zurückbewegt werden, um wieder in die Entsperrstellung zu gelangen.

Um die Parksperre in einem Notbetrieb einlegen zu können, wenn die Regelbetätigungseinheit, d.h. der elektromotorische Antrieb funktionsunfähig ist, weist die vorbekannte Parksperrenanordnung ferner eine Notbetätigungseinheit auf, die das Kulissenelement mit einem Drehmoment beaufschlagen kann. Hierfür besitzt das Kulissenelement eine Anlagefläche für eine im Normalbetrieb über eine Druckstangenfeder vorgespannte Druckstange der Notbetätigungseinheit. Weiterhin ist eine Arretierstange vorgesehen, die zum Festlegen der federvorgespannten Druckstange in einer Ausnehmung der Druckstange eingreift. Ein elektromagnetischer Hubaktuator der Notbetätigungseinheit greift an dem von der Druckstange abgewandten Ende der Arretierstange an und vermag diese bei Bestromung aus der Ausnehmung der Druckstange zu ziehen, um die Druckstange freizugeben, worauf Letztere infolge der Kraft der Druckstangenfeder das Kulissenelement verdreht. Diese Drehbewegung des Kulissenelements ermöglicht wiederum eine translatorische Bewegung der federvorgespannten Zugstange, um letztlich die Parksperrenklinke zu betätigen. Das Entsperren der Parksperre sowie das Spannen der Druckstangenfeder der Notbetätigungseinheit erfolgt mittels des elektromotorischen Antriebs.

Um den Notbetrieb zu ermöglichen, ist bei diesem Stand der Technik also eine Vielzahl von zusätzlichen Bauteilen erforderlich, was nicht zuletzt dem Umstand geschuldet ist, dass am Kulissenelement ein im Verhältnis großes Drehmoment aufgebracht werden muss, damit der Kulissenstein gegen die Kraft des Federelements an der Zugstange den oberen Totpunkt der Kulissenbahn überfährt, worauf das Federelement an der Zugstange erst in Richtung Sperren wirkt. Aufgrund der Anzahl und der für die Funktion notwendigen Relativlage der zusätzlichen Bauteile der Notbetätigungseinheit ergibt sich zudem ein großer Bauraumbedarf. Auch bedingt der erforderliche Umkehrbetrieb des Elektromotors einen Mehraufwand.

Ferner offenbart die Druckschrift DE 10 2015 206 157 A1 eine Parksperrenanordnung mit einem Betätigungselement für die Betätigung einer Parksperrenklinke zum Sperren und Freigeben eines Parksperrenrads. Zum Betätigen des Betätigungselements ist eine Antriebseinrichtung vorgesehen, die zumindest eine Kurvenkontur umfasst, mit der eine nur in eine Drehrichtung gerichtete Drehbewegung der Antriebseinrichtung in Axialbewegungen des Betätigungselements zum Sperren und Freigeben des Parksperrenrads umwandelbar ist.

Des Weiteren offenbart die Druckschrift DE 10 2015 206 156 A1 eine Parksperrenanordnung mit einem ersten Leistungspfad zum Freigeben und Sperren eines Parksperrenrads im Regelbetrieb und mit einem zweiten Leistungspfad zum Sperren des Parksperrenrads im Notbetrieb. Bei diesem Stand der Technik sind der erste Leistungspfad und der zweite Leistungspfad über ein Umlaufrädergetriebe mechanisch miteinander gekoppelt.

Schließlich ist aus der Druckschrift DE 10 2010 027 826 A1 eine Parksperre für ein Kraftfahrzeug bekannt, mit einem Sperrzahnrad, das drehfest mit einem Antriebselement des Kraftfahrzeugs verbunden ist, einer Sperrklinke, die mittels einer Betätigungseinrichtung in das Sperrzahnrad eingelegt und aus diesem ausgelegt werden kann, und einer mit der Betätigungseinrichtung gekoppelten Riegeleinrichtung. Letztere umfasst einen Riegel, der relativ zur Sperrklinke verstellbar ist, um die Sperrklinke mit dem Sperrzahnrad in Eingriff zu halten oder aus dem Sperrzahnrad freizugeben, wobei der Riegel in einer Sperrstellung der Betätigungseinrichtung mit einer in Verriegelungsrichtung wirkenden Kraft vorbelastet ist. Bei dem vorbekannten Riegel handelt es sich um einen um eine Schwenkachse verschwenkbaren Riegelkörper, der durch eine Schwenkbewegung zwischen seiner Verriegelungsstellung und seiner Entriegelungsstellung verstellbar ist.

### AUFGABENSTELLUNG

Der Erfindung liegt die Aufgabe zugrunde, einen möglichst einfach ausgebildeten elektrischen Parksperrenaktuator zur Betätigung einer Parksperre in einem Kraftfahrzeug zu schaffen, der im Falle eines Ausfalls des Elektromotors eine Notbetätigung der Parksperre mit gespeicherter Energie ermöglicht, gleichwohl gegenüber dem geschilderten Stand der Technik kompakter baut und die mit einem Umkehrbetrieb des Elektromotors verbundenen Nachteile vermeidet.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 15.

Bei einem elektrischen Parksperrenaktuator zur Betätigung einer Parksperre in einem Kraftfahrzeug, umfassend ein Gehäuse, einen Getriebemechanismus, der in dem Gehäuse aufgenommen und mittels eines Elektromotors drehend antreibbar ist, eine Betätigungsstange, die mit dem Getriebemechanismus wirkverbunden ist und ein Betätigungselement für die Parksperre trägt, wobei der Getriebemechanismus dazu dient, eine Drehbewegung in eine Axialbewegung der Betätigungsstange umzusetzen, so dass die Betätigungsstange von einer Entsperrstellung in eine Sperrstellung und umgekehrt verlagerbar ist, ein Federelement, das die Betätigungsstange in Richtung der Sperrstellung vorgespannt, einen Sperrmechanismus, der dazu dient, die Betätigungsstange in ihrer Entsperrstellung gegen die Kraft des Federelements zu halten, und eine Arretiereinrichtung, mittels der der Sperrmechanismus freigebbar ist, wobei die Betätigungsstange in einem Normalbetrieb des Parksperrenaktuators über den mittels des Elektromotors angetriebenen Getriebemechanismus verlagerbar ist, und wobei der Sperrmechanismus für einen Notbetrieb des Parksperrenaktuators wahlweise mittels der Arretiereinrichtung freigebbar ist, so dass sich die Betätigungsstange infolge der Kraft des Federelements ohne Unterstützung durch den Elektromotor in die Sperrstellung bewegt; weist der Sperrmechanismus erfindungsgemäß eine Sperrscheibe auf, die mit dem Getriebemechanismus antriebsverbunden ist und eine mit der Arretiereinrichtung zusammenwirkende Kontur besitzt, wobei im Normalbetrieb des Parksperrenaktuators die Sperrscheibe mittels des Elektromotors in einer ersten Drehrichtung antreibbar ist, die Kontur der Sperrscheibe in der ersten Drehrichtung ein von der Arretiereinrichtung unabhängiges Verdrehen der Sperrscheibe gestattet und die Kontur der Sperrscheibe in einer zweiten, entgegengesetzten Drehrichtung eine Anschlagfläche ausbildet, die gegen die Arretiereinrichtung zur Anlage bringbar ist und somit ein Verdrehen der Sperrscheibe in der zweiten Drehrichtung verhindert, wenn die Sperrscheibe eine Verdrehstellung einnimmt, in der sich die Betätigungsstange in ihrer Entsperrstellung befindet, und wobei im Notbetrieb des Parksperrenaktuators die Anschlagfläche durch die Arretiereinrichtung freigebbar ist, so dass sich die Sperrscheibe in der zweiten Drehrichtung verdreht, während sich die Betätigungsstange unter der Kraft des Federelements in die Sperrstellung bewegt.

Dadurch, dass die mit der Arretiereinrichtung zusammenwirkende Kontur der Sperrscheibe in der ersten Drehrichtung ein von der Arretiereinrichtung unabhängiges Verdrehen der Sperrscheibe gestattet, mithin verglichen zum gattungsbildenden Stand der Technik in der ersten Drehrichtung kein Ende bzw. keine Begrenzung besitzt, kann der mit der Sperrscheibe antriebsverbundene Getriebemechanismus mittels des Elektromotors in ein und derselben Drehrichtung des Elektromotors kontinuierlich weitergedreht werden. Dabei bewegt sich die mit dem Getriebemechanismus wirkverbundene Betätigungsstange von ihrer Entsperrstellung mit Unterstützung durch die Kraft des Federelements in ihre Sperrstellung und von dort wieder gegen die Kraft des Federelements in ihre Entsperrstellung, in der das Federelement insbesondere als Energiespeicher für den Notbetrieb wirkt. Somit kann der Elektromotor im Normalbetrieb die Betätigungsstange und das daran vorgesehene Betätigungselement für die Parksperre axial in alle Funktionsstellungen verlagern, ohne dass es hierfür eines Umkehrbetriebs des Elektromotors bedarf. Folglich kann der Elektromotor vorteilhaft für einen Einquadrantenbetrieb optimiert werden, für den auch die Ansteuerelektronik des Elektromotors sehr einfach ausgebildet sein kann. Ferner werden so jegliches Umkehrspiel und damit verbundene Nachteile, wie etwa erhöhter Verschleiß im Getriebemechanismus vermieden.

Nur in der anderen, zweiten Drehrichtung der Sperrscheibe bildet deren Kontur die Anschlagfläche für die Arretiereinrichtung aus, über welche die Sperrscheibe in der Entsperrstellung stromlos gegen die Kraft des Federelements an der Betätigungsstange gehalten werden kann. Für den Notbetrieb muss daher lediglich die Arretiereinrichtung zur Freigabe der Anschlagfläche betätigt werden, worauf die Sperrscheibe infolge der Kraft des Federelements in der zweiten Drehrichtung verdreht und sich die Betätigungsstange somit in ihre Sperrstellung verlagert. Verglichen zum gattungsbildenden Stand der Technik ist ein vorheriges Überwinden eines Totpunkts unter Einsatz einer größeren, für den Notbetrieb bereitzustellenden Energie nicht erforderlich, so dass - neben der Arretiereinrichtung - zusätzliche Bauteile für den Notbetrieb sowie der damit verbundene Mehraufwand und größere Bauraumbedarf entbehrlich sind. Im Ergebnis kann der erfindungsgemäße Parksperrenaktuator gegenüber dem geschilderten Stand der Technik einfacher und kompakter ausgebildet werden.

Grundsätzlich ist es möglich, für die Drehzahlwandlung im Getriebemechanismus ein Stirnradgetriebe oder ein Schneckengetriebe einzusetzen. Bevorzugt ist es indes, wenn der Getriebemechanismus ein Planetengetriebe umfasst, das die mittels des Elektromotors erzeugte Antriebsdrehzahl des Planetengetriebes in eine geringere Abtriebsdrehzahl des Planetengetriebes wandelt. Ein Planetengetriebe, bei dem Antrieb und Abtrieb fluchten, weist vorteilhaft eine sehr kompakte Bauform auf. Im Hinblick auf ein geringes Antriebsdrehmoment des Elektromotors und eine hohe Drehwinkelauflösung bei dennoch kurzen Abmessungen ist das Planetengetriebe vorzugsweise zweistufig ausgebildet, mit einer ersten Getriebestufe und einer zweiten Getriebestufe. Einer sehr kompakten Ausbildung des Parksperrenaktuators ist es hierbei ferner förderlich, wenn die Sperrscheibe zwischen der ersten Getriebestufe und der zweiten Getriebestufe angeordnet ist.

Vorteilhaft kann das Planetengetriebe ein Hohlrad aufweisen, welches einstückig mit dem Gehäuse aus Kunststoff spritzgegossen ist, was eine sehr kostengünstige Herstellung ermöglicht und zudem für ein sehr geringes Gewicht des Parksperrenaktuators sorgt. Auch die Planetenräder des Planetengetriebes können aus Kunststoff bestehen, die sich mit geraden Verzahnungen leicht und kostengünstig herstellen lassen sowie infolge der inneren Dämpfung des Kunststoffmaterials auch hinreichend laufruhig sind.

Um mittels des Getriebemechanismus die Drehbewegung des Elektromotors in die Axialbewegung der Betätigungsstange umzusetzen, sind verschiedene Konzepte denkbar. So kann etwa ein zentrisch angetriebener Nocken mit der geeignet geführten Betätigungsstange zusammenwirken. Insbesondere im Hinblick auf eine einfache konstruktive Ausgestaltung mit geringem Führungsaufwand bevorzugt ist es indes, wenn der Getriebemechanismus eine Kurbelwange aufweist, an der die Betätigungsstange exzentrisch angelenkt ist. Im Falle eines Planetengetriebes für die Drehzahlwandlung kann vorteilhaft ein Planetenträger des Planetengetriebes die Kurbelwange ausbilden.

Besonders einfach lässt sich die Sperrscheibe als Feinstanzteil aus Stahl oder als Spritzgussteil aus einem Hochleistungskunststoff herstellen, wenn die Kontur am Außenumfang der Sperrscheibe ausgebildet ist - im Gegensatz zu etwa einer ebenfalls denkbaren, von der Stirnseite ausgehenden Kulissenvertiefung in der Sperrscheibe - und die Anschlagfläche der Kontur bezogen auf eine Drehachse der Sperrscheibe eine radial innere Kante und eine radial äußere Kante aufweist, wobei die Kontur über dem Umfang der Sperrscheibe gesehen zwischen der radial inneren Kante und der radial äußeren Kante der Anschlagfläche wenigstens teilweise in der Form einer archimedischen Spirale verläuft. Damit steigt die mit der Arretiereinrichtung zusammenwirkende Fläche der Sperrscheibenkontur in der ersten Drehrichtung gesehen ausgehend von der Anschlagfläche über eine Drehung der Sperrscheibe kontinuierlich und sanft an, bis die Anschlagfläche wieder erreicht wird, wodurch hohe Beschleunigungen an der Arretiereinrichtung in deren Freigaberichtung vermieden und der Laufruhe abträgliche Massenkräfte nicht erzeugt werden.

Vorzugsweise verläuft die Anschlagfläche der Kontur bezogen auf eine durch die Drehachse der Sperrscheibe verlaufende radiale Ebene geringfügig geneigt, z.B. in einem Winkel von 3° bis 4°, so dass die radial innere Kante der Anschlagfläche in Richtung der ersten Drehrichtung der Sperrscheibe gesehen vor der radial äußeren Kante der Anschlagfläche liegt. Damit bedarf es - im Vergleich zu einer ebenfalls denkbaren radialen Ausrichtung der Anschlagfläche - vorteilhaft nur sehr geringer, durch die Arretiereinrichtung aufzubringender Kräfte, um die Anschlagfläche im Notbetrieb für eine Drehung der Sperrscheibe in der zweiten Drehrichtung freizugeben.

Prinzipiell ist es möglich, als Arretiereinrichtung eine kleine, federvorgespannte, hydraulische Kolben-Zylinder-Anordnung mit einer mit der Anschlagfläche der Sperrscheibe zusammenwirkenden Kolbenstange vorzusehen, oder auch nur einen in Richtung der Kontur an der Sperrscheibe federvorgespannten Stift, der über einen Seilzug od.dgl. von der Kontur weggezogen werden kann, um deren Anschlagfläche freizugeben. Insbesondere im Hinblick auf wiederum geringe Kosten und den angedachten Einsatz des Parksperrenaktuators in einem Kraftfahrzeug mit einem Elektro(teil)antrieb bevorzugt ist es allerdings, wenn es sich bei der Arretiereinrichtung um einen Hubmagneten handelt, mit einem von einer gehäusefesten Spule umgebenen, axialbeweglichen Tauchkern, der ein der Kontur der Sperrscheibe gegenüberliegendes Kontaktende aufweist und mittels einer Vorspannfeder in Richtung der Kontur vorgespannt ist, wobei das Kontaktende in einem unbestromten Zustand der Spule an der Kontur anliegt, so dass es mit der Anschlagfläche der Kontur in Eingriff zu kommen vermag, und in einem bestromten Zustand der Spule gegen die Kraft der Vorspannfeder von der Kontur weggezogen ist, um deren Anschlagfläche freizugeben. Derartige Hubmagneten sind kostengünstig und problemlos kommerziell verfügbar und besitzen eine günstige Energiebilanz, da die elektrische Ansteuerung des Hubmagneten immer nur sehr kurzzeitig erfolgt, nämlich dann, wenn im Notbetrieb des Parksperrenaktuators die Anschlagfläche der Sperrscheibe freizugeben ist, um unter der wirkenden Kraft des Federelements an der Betätigungsstange ein Verdrehen der Sperrscheibe in der zweiten Drehrichtung und damit eine axiale Verlagerung der Betätigungsstange in die Sperrstellung zu gestatten. Ein weiterer Vorteil des Einsatzes eines Hubmagneten besteht darin, dass mittels einer Elektronik die Induktivität der Spule erfasst werden kann, um die Stellung des Tauchkerns zu ermitteln. Somit kann auf denkbar einfache Art und Weise eine Positionsinformation zur Arretiereinrichtung - arretiert die Sperrscheibe oder gibt diese frei - gewonnen werden.

Vorteilhaft kann das Gehäuse des Parksperrenaktuators weiterhin einstückig mit einem Flansch zur Befestigung an einem Getriebegehäuse versehen sein, der eine zentrale Öffnung aufweist, durch welche sich die das Betätigungselement tragende Betätigungsstange und das Federelement nach außen hindurch erstrecken. Somit kann der Parksperrenaktuator einfach von außen an dem Getriebegehäuse angeflanscht werden; der gesonderten Aufnahme von Bauteilen des Parksperrenaktuators im Getriebegehäuse bedarf es nicht.

Insbesondere im Hinblick auf einen geringen Bauraumbedarf sowie eine einfache Montage- und Anschlussmöglichkeit eines als Baugruppe vormontierten und bereitgestellten Parksperrenaktuators an einem Getriebe ist es ferner bevorzugt, wenn in dem Gehäuse des Parksperrenaktuators ein Elektronikmodul integriert ist, das wenigstens eine für die Ansteuerung des Elektromotors erforderliche Elektronik und einen Schnittstellenbaustein zur elektrischen Kontaktierung des Parksperrenaktuators umfasst, wobei der Getriebemechanismus in dem Gehäuse durch einen Zwischendeckel von dem Elektronikmodul getrennt ist, das seinerseits zur Umgebung hin mittels eines am Gehäuse befestigten Außendeckels abgedichtet ist. Vorteilhaft kann der Zwischendeckel hierbei auch ein Lager im Gehäuse halten (Zweitfunktion des Zwischendeckels), mittels dessen ein Teil des Getriebemechanismus, etwa die vorerwähnte Kurbelwange gegenüber dem Gehäuse reibungsarm drehbar gelagert ist.

Schließlich kann in dem Gehäuse des Parksperrenaktuators vorteilhaft geschützt auch eine Sensoranordnung zur Positionserfassung der Betätigungsstange integriert sein, mit einem im Elektronikmodul vorgesehenen Sensorelement und einem Signalelement, das im Bereich der exzentrischen Anlenkung der Betätigungsstange an der Kurbelwange mit der Betätigungsstange oder der Kurbelwange verbunden und mittels des Sensorelements durch den Zwischendeckel hindurch detektierbar ist, um zumindest die Entsperrstellung und die Sperrstellung der Betätigungsstange, ggf. auch deren Hubweg dazwischen zu erfassen. Auch diese Maßnahme ist insbesondere einem geringen Bauraumbedarf des Parksperrenaktuators förderlich.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert. In den Zeichnungen zeigen:
- Fig. 1: eine perspektivische Ansicht eines erfindungsgemäßen elektrischen Parksperrenaktuators in seiner Gebrauchslage an einer hier nur schematisch gezeigten, über eine axial verfahrbare Betätigungsstange des Parksperrenaktuators betätigbare Parksperre von schräg oben / vorne rechts, mit Blick auf einen an einem Gehäuse des Parksperrenaktuators angeflanschten Elektromotor für einen Normalbetrieb des Parksperrenaktuators;
- Fig. 2: eine perspektivische Ansicht des Parksperrenaktuators gemäß Fig. 1 von schräg unten / vorne rechts, mit Blick auf eine ebenfalls am Gehäuse befestigte, elektromagnetische Arretiereinrichtung für einen Notbetrieb des Parksperrenaktuators vermittels eines Energiespeichers in Form eines Federelements, das die Betätigungsstange in Richtung ihrer Sperrstellung vorspannt;
- Fig. 3: eine im Bereich des Elektromotors abgebrochene, entlang von Mittelachsen des Elektromotors und der Arretiereinrichtung teilweise aufgebrochene sowie in der Zeichnungsebene um 90° im Uhrzeigersinn gedrehte Seitenansicht des Parksperrenaktuators gemäß Fig. 1, wobei sich die bewegten Teile des Parksperrenaktuators in ihrer Entsperrstellung befinden, in der die Parksperre nicht betätigt ist;
- Fig. 4: eine hinsichtlich der Abbruch- und Aufbruchverläufe sowie der Darstellungsweise der Fig. 3 entsprechende Seitenansicht des Parksperrenaktuators gemäß Fig. 1, wobei sich die bewegten Teile des Parksperrenaktuators in ihrer Sperrstellung befinden, in der die Parksperre betätigt ist;
- Fig. 5: eine abgebrochene Schnittansicht des Parksperrenaktuators gemäß Fig. 1 entsprechend der Schnittverlaufslinie V-V in Fig. 3, mit Blick auf eine erste Getriebestufe eines Planetengetriebes als Drehzahl-WandelBaugruppe eines Getriebemechanismus des Parksperrenaktuators in der Entsperrstellung;
- Fig. 6: eine abgebrochene Schnittansicht des Parksperrenaktuators gemäß Fig. 1 entsprechend der Schnittverlaufslinie VI-VI in Fig. 4, mit Blick auf die erste Getriebestufe des Planetengetriebes in der Sperrstellung;

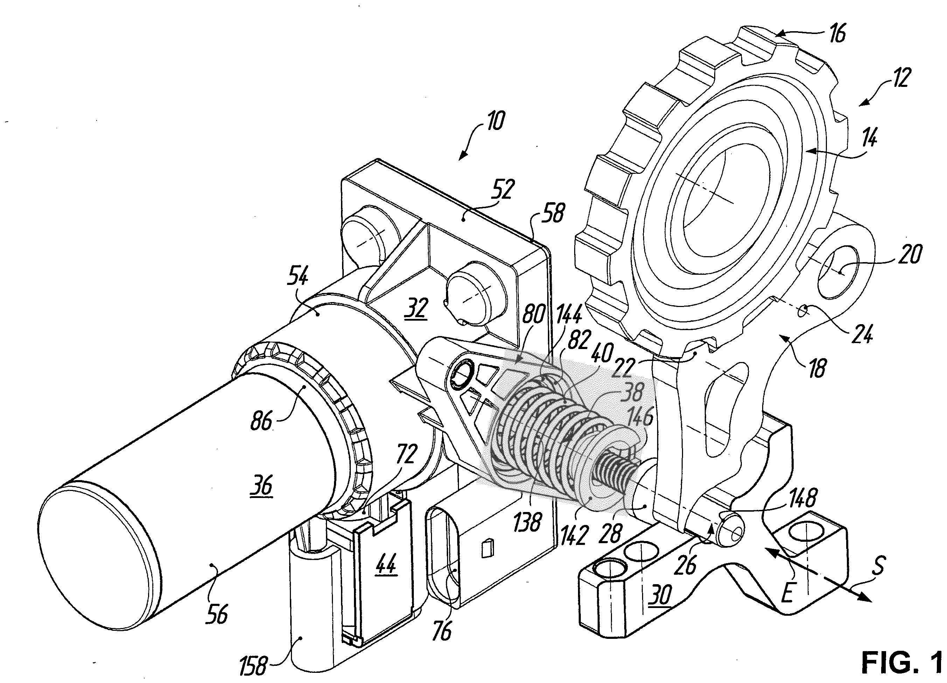

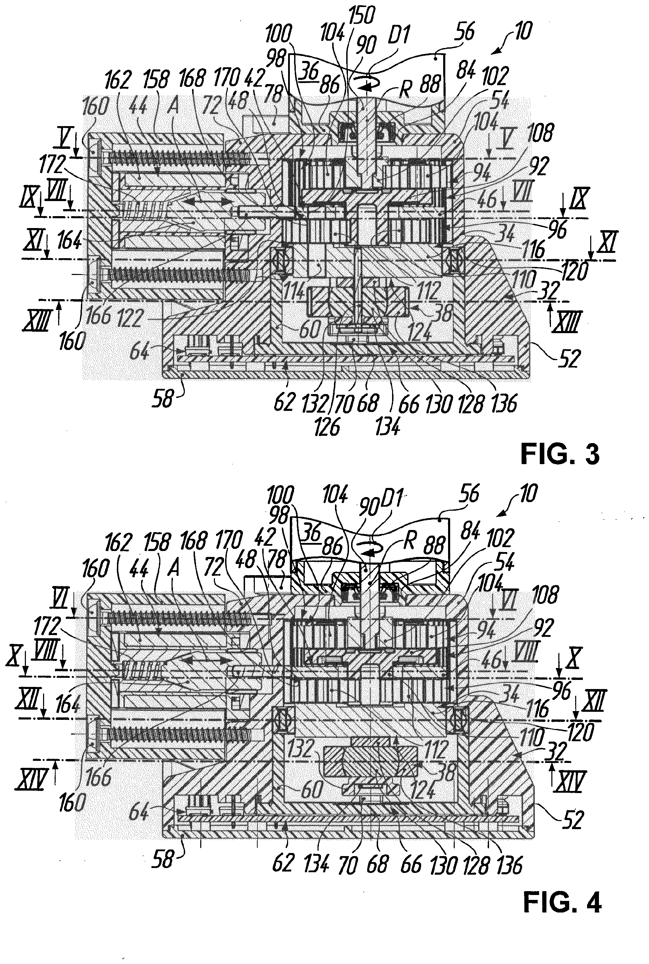

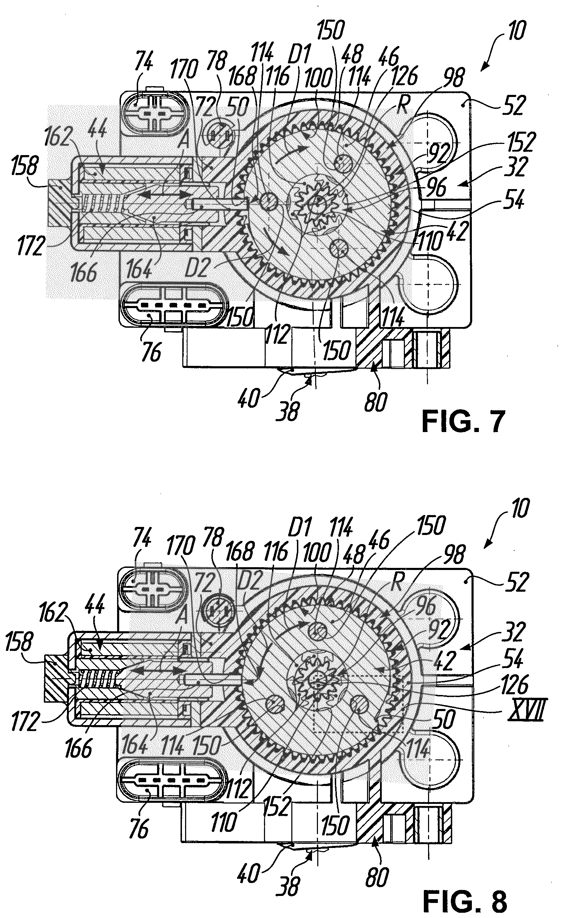

- Fig. 7: eine abgebrochene Schnittansicht des Parksperrenaktuators gemäß Fig. 1 entsprechend der Schnittverlaufslinie VII-VII in Fig. 3, die mittig durch die Arretiereinrichtung verläuft, zur Veranschaulichung, wie die Arretiereinrichtung mit einer mit dem Getriebemechanismus antriebsverbundenen Sperrscheibe eines Sperrmechanismus zusammenwirkt, der dazu dient, die Betätigungsstange für den Notbetrieb gegen die Kraft des Federelements in ihrer Entsperrstellung zu halten, wobei sich die Sperrscheibe von der Arretiereinrichtung an einer Anschlagfläche einer Kontur der Sperrscheibe festgesetzt in der Entsperrstellung befindet;
- Fig. 8: eine abgebrochene Schnittansicht des Parksperrenaktuators gemäß Fig. 1 entsprechend der Schnittverlaufslinie VIII-VIII in Fig. 4, wobei sich die Sperrscheibe von der Arretiereinrichtung freigegeben in der Sperrstellung befindet;
- Fig. 9: eine abgebrochene Schnittansicht des Parksperrenaktuators gemäß Fig. 1 entsprechend der Schnittverlaufslinie IX-IX in Fig. 3, mit Blick auf eine zweite Getriebestufe des Planetengetriebes in der Entsperrstellung;
- Fig. 10: eine abgebrochene Schnittansicht des Parksperrenaktuators gemäß Fig. 1 entsprechend der Schnittverlaufslinie X-X in Fig. 4, mit Blick auf die zweite Getriebestufe des Planetengetriebes in der Sperrstellung;
- Fig. 11: eine abgebrochene Schnittansicht des Parksperrenaktuators gemäß Fig. 1 entsprechend der Schnittverlaufslinie XI-XI in Fig. 3, die mittig durch eine mittels eines lediglich schematisch gezeigten Lagers im Gehäuse drehgelagerte Kurbelwange des Getriebemechanismus verläuft, an der die Betätigungsstange exzentrisch angelenkt ist, um eine Drehbewegung des Planetengetriebes in eine Axialbewegung der Betätigungsstange umzusetzen, wobei sich die Kurbelwange nahe ihres hier oberen Tot- bzw. Umkehrpunkts in der Entsperrstellung befindet;
- Fig. 12: eine abgebrochene Schnittansicht des Parksperrenaktuators gemäß Fig. 1 entsprechend der Schnittverlaufslinie XII-XII in Fig. 4, wobei sich die Kurbelwange in ihrem hier unteren Tot- bzw. Umkehrpunkt in der Sperrstellung befindet;
- Fig. 13: eine abgebrochene Schnittansicht des Parksperrenaktuators gemäß Fig. 1 entsprechend der Schnittverlaufslinie XIII-XIII in Fig. 3, die mittig durch die an der Kurbelwange exzentrisch angebundene Betätigungsstange verläuft, wobei die Kurbelwange nahe ihres hier unteren Tot- bzw. Umkehrpunkts steht, während sich die Betätigungsstange in der zurückgezogenen Entsperrstellung befindet;
- Fig. 14: eine abgebrochene Schnittansicht des Parksperrenaktuators gemäß Fig. 1 entsprechend der Schnittverlaufslinie XIV-XIV in Fig. 4, wobei die Kurbelwange in ihrem hier oberen Tot- bzw. Umkehrpunkt steht, während sich die Betätigungsstange in der maximal ausgefahrenen Sperrstellung befindet;
- Fig. 15: eine in der Zeichnungsebene um 90° im Uhrzeigersinn gedrehte, nach oben abgebrochene Seitenansicht des Parksperrenaktuators gemäß Fig. 1, mit Blick auf einen am Gehäuse einstückig ausgebildeten Flansch zur Befestigung an einem Getriebegehäuse;
- Fig. 16: eine nach oben abgebrochene Schnittansicht des Parksperrenaktuators gemäß Fig. 1 entsprechend der Schnittverlaufslinie XVI-XVI in Fig. 15, wobei sich die Betätigungsstange in der maximal ausgefahrenen Sperrstellung befindet, insbesondere zur Veranschaulichung einer in dem Gehäuse integrierten Sensoranordnung zur Positionserfassung der Betätigungsstange; und
- Fig. 17: eine im Maßstab vergrößerte Teilschnittansicht des Parksperrenaktuators gemäß Fig. 1 entsprechend dem Detail XVII in Fig. 8, zur besseren Illustration einer Schrägstellung der Anschlagfläche der Kontur der Sperrscheibe bezogen auf die radiale Richtung zur Drehachse der Sperrscheibe.

### DETAILLIERTE BESCHREIBUNG DES AUSFÜHRUNGSBEISPIELS

In den Figuren beziffert das Bezugszeichen 10 einen elektrischen Parksperrenaktuator zur Betätigung einer Parksperre 12 in einem Kraftfahrzeug. Die Parksperre 12 weist gemäß Fig. 1 in an sich bekannter Weise ein Parksperrenrad 14 auf, das dreh- und axialfest auf einer nicht dargestellten Getriebewelle eines Kraftfahrzeuggetriebes angeordnet ist und außenumfangsseitig eine Verzahnung 16 besitzt. Zur formschlüssigen Arretierung des Antriebsstrangs des Kraftfahrzeugs umfasst die Parksperre 12 ferner eine Sperrklinke 18, die an einem hier nicht gezeigten Getriebegehäuse um eine Schwenkachse 20 verschwenkbar angelenkt ist und einen Verriegelungszahn 22 aufweist, der bei einem Verschwenken der Sperrklinke 18 um die Schwenkachse 20 mit der Verzahnung 16 des Parksperrenrads 14 formschlüssig einzugreifen vermag. Bei dem Bezugszeichen 24 ist eine Bohrung in der Sperrklinke 18 angedeutet, an der eine hier nicht gezeigte, gegenüber dem Getriebegehäuse abgestützte Rückstellfeder angreift, welche die Sperrklinke 18 vom Parksperrenrad 14 weg in eine entsperrte Stellung vorspannt.

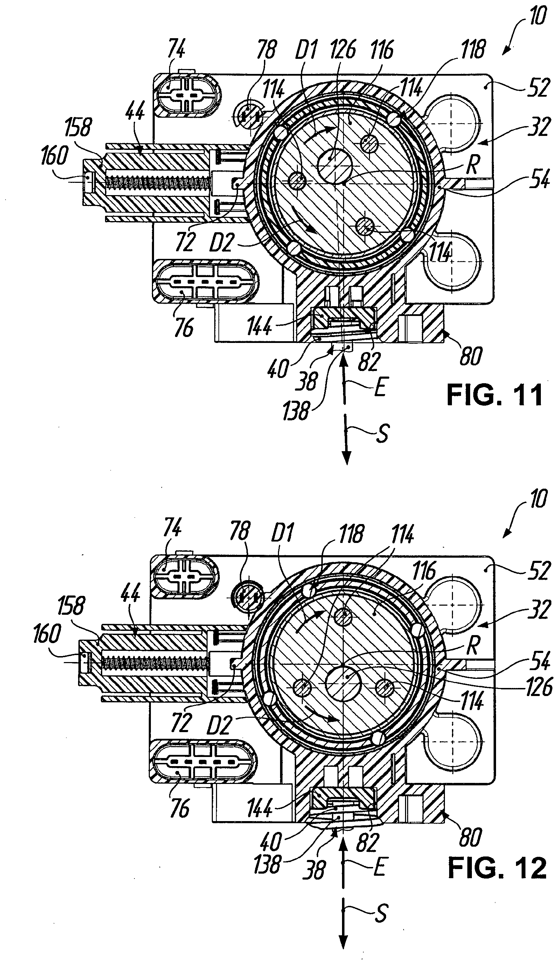

Zum Verschwenken der Sperrklinke 18 um die Schwenkachse 20 ist ein Betätigungselement 26 vorgesehen, welches im dargestellten Ausführungsbeispiel einen (doppel)konischen Flächenabschnitt 28 aufweist und auf noch zu beschreibende Weise mittels des Parksperrenaktuators 10 wahlweise in eine Sperrrichtung S oder eine Entsperrrichtung E axial verlagerbar ist, wie in den Fig. 1, 2, 11 bis 14 und 16 mit Pfeilen angedeutet. Dabei stützt sich der konische Flächenabschnitt 28 gemäß Fig. 1 in an sich bekannter Weise an einem getriebegehäusefesten Konusführungselement 30 ab, so dass bei einer Axialbewegung des Betätigungselements 26 in der Sperrrichtung S die Sperrklinke 18 in Fig. 1 entgegen der Kraft der nicht dargestellten Rückstellfeder um die Schwenkachse 20 drehend angehoben wird, um den Verriegelungszahn 22 mit der Verzahnung 16 des Parksperrenrads 14 formschlüssig in Eingriff zu bringen. Bei einer Axialbewegung des Betätigungselements 26 in der Entsperrrichtung E hingegen wird der konische Flächenabschnitt 28 des Betätigungselements 26 aus seiner Lage zwischen Sperrklinke 18 und Konusführungselement 30 weggezogen, was zur Folge hat, dass die Sperrklinke 18 in Fig. 1 infolge der Kraft der Rückstellfeder um die Schwenkachse 20 drehend abgesenkt wird, wobei der Verriegelungszahn 22 von der Verzahnung 16 des Parksperrenrads 14 außer Eingriff gelangt.

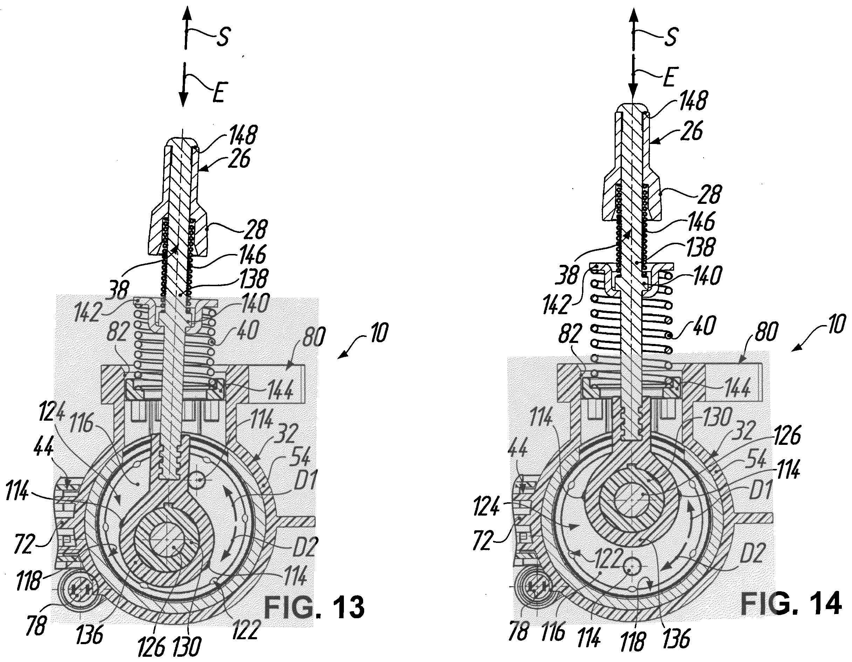

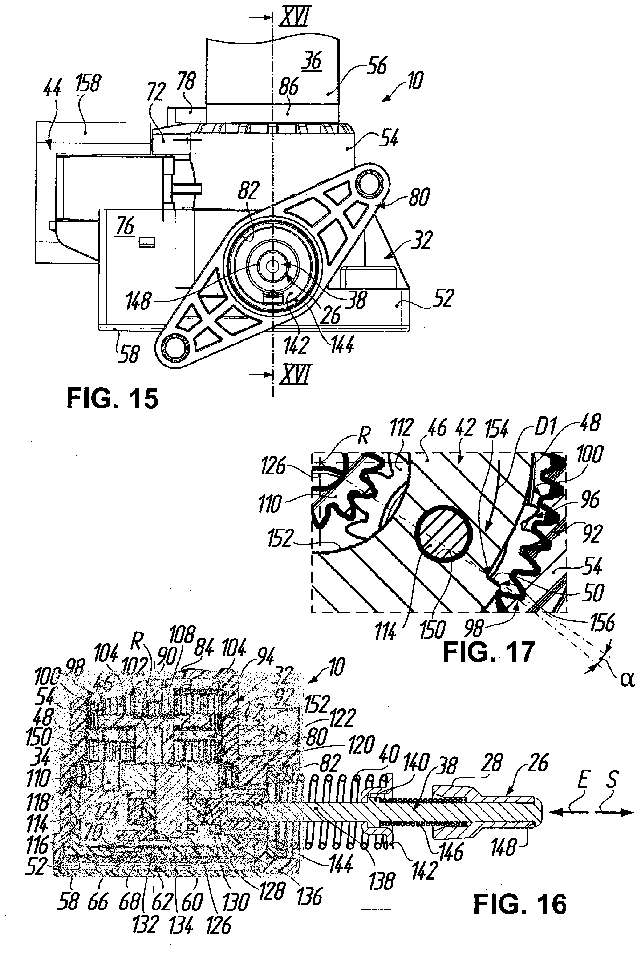

Der Parksperrenaktuator 10 umfasst gemäß insbesondere den Fig. 1 bis 4 ein vorzugsweise aus einem Kunststoff spritzgegossenes Gehäuse 32, in dem ein in den Fig. 3, 4 und 16 allgemein mit dem Bezugszeichen 34 bezifferter Getriebemechanismus aufgenommen ist, der mittels eines von außen am Gehäuse 32 angeflanschten Elektromotors 36, beispielsweise eines kostengünstigen Bürstenmotors, drehend angetrieben werden kann und dazu dient, eine Drehbewegung in eine Axialbewegung einer mit dem Getriebemechanismus 34 wirkverbundenen Betätigungsstange 38 umzusetzen, die das Betätigungselement 26 für die Parksperre 12 trägt. Die Betätigungsstange 38 kann in einem Normalbetrieb des Parksperrenaktuators 10 über den elektromotorisch angetriebenen Getriebemechanismus 34 von einer in Fig. 13 gezeigten, eingezogenen Entsperrstellung in der Sperrrichtung S in eine in den Fig. 14 und 16 dargestellte, ausgefahrene Sperrstellung und umgekehrt, d.h. in der Entsperrrichtung E verlagert werden. Ein die Betätigungsstange 38 umgebendes Federelement 40 - hier eine Schraubendruckfeder - spannt die Betätigungsstange 38 dabei als Energiespeicher in Richtung der Sperrstellung vor.

Ferner ist, wie nachfolgend noch näher beschrieben werden wird, ein Sperrmechanismus 42 vorgesehen (siehe die Fig. 3 bis 8, 16 und 17), der dazu dient, die Betätigungsstange 38 in ihrer Entsperrstellung gegen die Kraft des Federelements 40 zu halten, und für einen Notbetrieb wahlweise mittels einer Arretiereinrichtung 44 freigegeben werden kann, so dass sich die Betätigungsstange 38 infolge der Kraft des Federelements 40 ohne elektromotorische Unterstützung in die Sperrstellung bewegt.

Wesentlich ist, dass der Sperrmechanismus 42 eine mit dem Getriebemechanismus 34 antriebsverbundene Sperrscheibe 46 aufweist (vgl. wiederum insbesondere die Fig. 3 bis 8, 16 und 17), die im Normalbetrieb elektromotorisch in einer ersten Drehrichtung D1 angetrieben werden kann und, wie in der Folge ebenfalls noch im Detail erläutert werden wird, eine mit der Arretiereinrichtung 44 zusammenwirkende Kontur 48 besitzt, welche in der ersten Drehrichtung D1 ein von der Arretiereinrichtung 44 unabhängiges Verdrehen der Sperrscheibe 46 gestattet und in einer zweiten, entgegengesetzten Drehrichtung D2 eine Anschlagfläche 50 ausbildet, die gegen die Arretiereinrichtung 44 zur Anlage gebracht werden kann (siehe Fig. 7), wenn die Sperrscheibe 46 eine Verdrehstellung einnimmt, in der sich die Betätigungsstange 38 in ihrer Entsperrstellung befindet. In einem Notbetrieb, d.h. bei Ausfall des Elektromotors 36 kann die Anschlagfläche 50 der Sperrscheibe 46 durch die Arretiereinrichtung 44 freigegeben werden, so dass die Sperrscheibe 46 in der zweiten Drehrichtung D2 verdreht, während sich die federvorgespannte Betätigungsstange 38 in der Sperrrichtung S in ihre Sperrstellung bewegt.

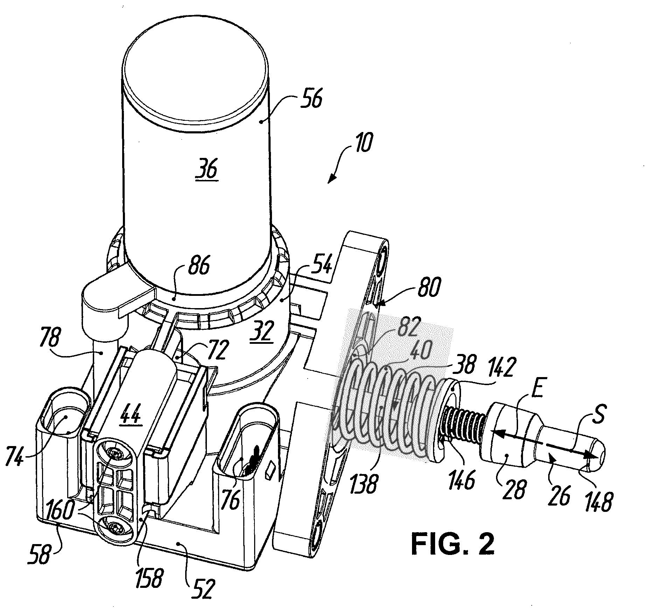

Wie gemäß den Fig. 1 und 2 schon von außen zu erkennen ist, hat das Gehäuse 32 des Parksperrenaktuators 10 eine in einer Draufsicht gesehen im Wesentlichen rechteckige Gehäusebasis 52, von dem sich ein im Wesentlichen zylinderförmiger Getriebegehäuseabschnitt 54 domartig wegerstreckt. An dem von der Gehäusebasis 52 abgewandten Ende des Getriebegehäuseabschnitts 54 ist ein im dargestellten Ausführungsbeispiel vom Gehäuse 32 separates, teilweise aus Kunststoff bestehendes Motorgehäuse 56 des Elektromotors 36 angeflanscht. Auf der vom Motorgehäuse 56 abgewandten Seite ist das Gehäuse 32 mittels eines Außendeckels 58 aus Kunststoff verschlossen, der mit der Gehäusebasis 52 flüssigkeitsdicht laserverschweißt ist.

Im Gehäuse 32 ist zwischen der Gehäusebasis 52 und dem Getriebegehäuseabschnitt 54 gemäß den Fig. 3, 4 und 16 ein im Wesentlichen becherförmiger Zwischendeckel 60 aus Kunststoff eingefügt, der den Innenraum des Gehäuses 32 ebenfalls flüssigkeitsdicht in zwei Bereiche unterteilt, z.B. mittels einer Laserverschweißung. Während in dem Bereich des Getriebegehäuseabschnitts 54 - wie der Name schon impliziert - der geeignet geschmierte Getriebemechanismus 34 und der Sperrmechanismus 42 aufgenommen sind, dient die Gehäusebasis 52 der trockenen Aufnahme eines im Parksperrenaktuator 10 integrierten Elektronikmoduls 62. Das Elektronikmodul 62 besitzt wenigstens eine für die Ansteuerung des Elektromotors 36 erforderliche Elektronik und einen Schnittstellenbaustein 64 (vgl. die Fig. 3 und 4) zur elektrischen Kontaktierung des Parksperrenaktuators 10.

Ferner ist im dargestellten Ausführungsbeispiel gemäß insbesondere der Fig. 16 in dem Gehäuse 32 auch eine Sensoranordnung 66 zur Positionserfassung der Betätigungsstange 38 integriert. Die Sensoranordnung 66 umfasst ein im Elektronikmodul 62 vorgesehenes, ortsfestes Sensorelement 68 (z.B. einen Hall-Sensor) und ein Signalelement 70 (Magnet). Letzteres ist im Bereich des Getriebemechanismus 34 zusammen mit der Betätigungsstange 38 beweglich angeordnet und kann mittels des Sensorelements 68 durch den Zwischendeckel 60 hindurch detektiert werden, um zumindest die Entsperrstellung und die Sperrstellung der Betätigungsstange 38 zu erfassen.

Gemäß insbesondere den Fig. 1 und 2 ist seitlich an dem Getriebegehäuseabschnitt 54 des Gehäuses 32 ein Anschlussbereich 72 für die Arretiereinrichtung 44 vorgesehen, bei der es sich im dargestellten Ausführungsbeispiel um einen Hubmagneten handelt, also einen elektromagnetischen Aktor. In den Fig. 1 und 2 ist weiterhin zu erkennen, dass das Gehäuse 32 im Bereich der Gehäusebasis 52 mit sich parallel zu dem Getriebegehäuseabschnitt 54 von der Gehäusebasis 52 wegerstreckenden Elektroanschlüssen 74, 76 für die elektrische Kontaktierung des Parksperrenaktuators 10 über das Elektronikmodul 62 versehen ist. Während der in Fig. 2 linke Elektroanschluss 74 zur unabhängigen elektrischen Ansteuerung der Arretiereinrichtung 44 dient, ist der in Fig. 2 rechte Elektroanschluss 76 für die elektrische Kontaktierung des Elektromotors 36 und der Sensoranordnung 66 vorgesehen. In Fig. 2 ist ferner ein Verbindungsabschnitt 78 zu sehen, der sich von der Gehäusebasis 52 bis zum Motorgehäuse 56 erstreckt und über den das Elektronikmodul 62 mit dem Elektromotor 36 elektrisch verbunden ist.

Schließlich ist gemäß den Fig. 1, 2 und 15 von außen noch zu erkennen, dass das Gehäuse 32 um 90° zum Anschlussbereich 72 für die Arretiereinrichtung 44 um die Mittelachse des Gehäuses 32 versetzt mit einem Flansch 80 zur Befestigung an dem Getriebegehäuse (nicht dargestellt) versehen ist. Der Flansch 80 weist eine zentrale Öffnung 82 auf, durch welche sich die das Betätigungselement 26 tragende Betätigungsstange 38 und das Federelement 40 nach außen hindurch erstrecken.

Zum Inneren des Parksperrenaktuators 10 sei zunächst auf die Fig. 3, 4 und 16 Bezug genommen. Demgemäß ist der Getriebegehäuseabschnitt 54 an seiner in diesen Figuren oberen Abschlusswand mit einer zentralen Öffnung 84 versehen, an der ein Befestigungsflansch 86 des Motorgehäuses 56 zentriert und auf hier nicht gezeigte Weise befestigt ist. In einer zylindrischen Aussparung des Befestigungsflanschs 86 ist ein Radialwellendichtring 88 aufgenommen, durch den sich eine Abtriebswelle 90 des Elektromotors 36 in den Getriebegehäuseabschnitt 54 abgedichtet hinein erstreckt, um den Getriebemechanismus 34 drehend anzutreiben. Der Getriebemechanismus 34 umfasst im dargestellten Ausführungsbeispiel allgemein zwei Baugruppen, nämlich eine erste Baugruppe, die dazu dient, die mittels des Elektromotors 36 erzeugte Antriebsdrehzahl mit geringerem Drehmoment in eine geringere Abtriebsdrehzahl mit höherem Drehmoment zu wandeln, und eine zweite Baugruppe, mittels der die Drehbewegung der ersten Baugruppe in die Axialbewegung der Betätigungsstange 38 umgesetzt wird.

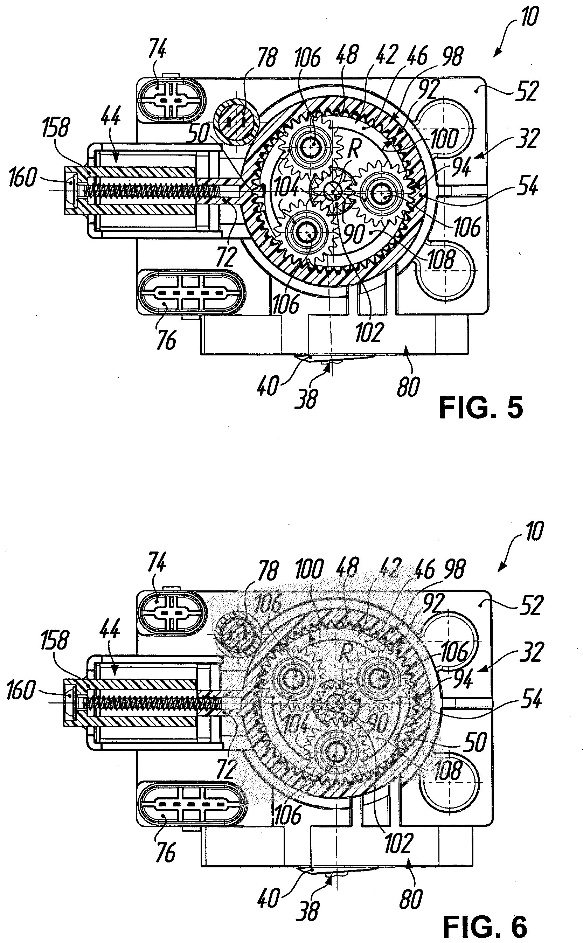

Bei der ersten Baugruppe des Getriebemechanismus 34 handelt es sich im vorliegenden Ausführungsbeispiel um ein Planetengetriebe 92, das zweistufig ausgebildet ist, mit einer ersten Getriebestufe 94 und einer zweiten Getriebestufe 96. Gemein ist beiden koaxial angeordneten Getriebestufen 94, 96 des Planetengetriebes 92 ein gehäusefestes Hohlrad 98, welches einstückig mit dem Getriebegehäuseabschnitt 54 des Gehäuses 32 aus Kunststoff spritzgegossen ist und eine gerade Verzahnung 100 aufweist. Ein geradverzahntes erstes Sonnenritzel 102 der ersten Getriebestufe 94 ist an dem in den Getriebegehäuseabschnitt 54 vorstehenden Ende der Abtriebswelle 90 befestigt und kämmt gemäß den Fig. 5 und 6 mit drei um die Drehachse R gleichmäßig voneinander winkelbeabstandeten, geradverzahnten ersten Planetenrädern 104. Die ebenfalls aus Kunststoff spritzgegossenen, in den Fig. 3, 4 und 16 nicht geschnitten gezeigten ersten Planetenräder 104 sind gemäß den Fig. 5 und 6 mittels Zylinderstiften 106 drehbar an einem ersten Planetenträger 108 gelagert und kämmen ihrerseits mit dem Hohlrad 98.

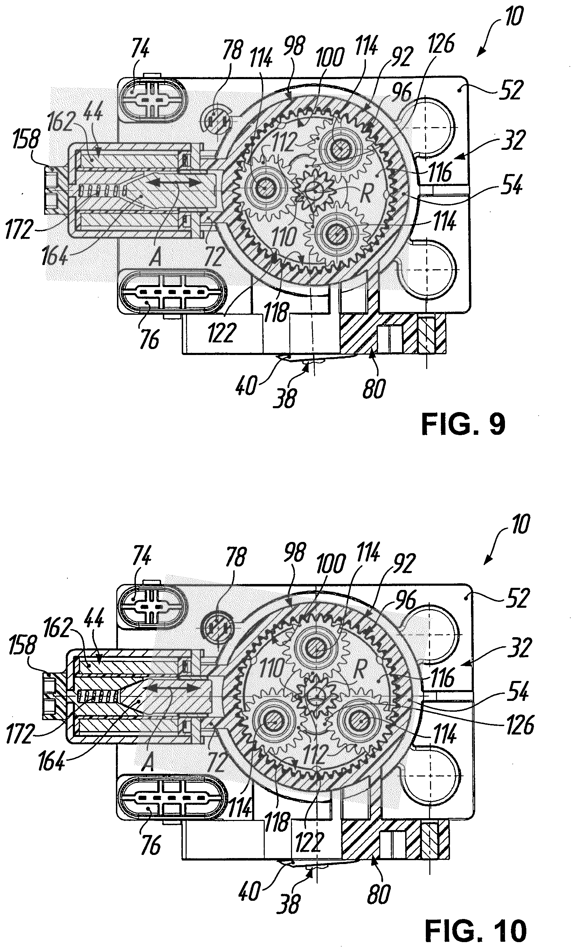

Ein geradverzahntes zweites Sonnenritzel 110 der zweiten Getriebestufe 96 ist auf der vom ersten Sonnenritzel 102 abgewandten Seite des ersten Planetenträgers 108 einstückig mit dem ersten Planetenträger 108 aus Kunststoff spritzgegossen und kämmt gemäß den Fig. 7 bis 10 mit drei um die Drehachse R gleichmäßig voneinander winkelbeabstandeten, geradverzahnten zweiten Planetenrädern 112. Die ebenfalls aus Kunststoff spritzgegossenen, in den Fig. 3, 4 und 16 nicht geschnitten dargestellten zweiten Planetenräder 112 sind gemäß den Fig. 9 und 10 mittels Zylinderstiften 114 drehbar an einem metallischen zweiten Planetenträger 116 gelagert und kämmen ihrerseits mit dem Hohlrad 98.

Der zweite Planetenträger 116 ist an seinem Außenumfang mittels eines in den Figuren lediglich schematisch gezeigten Lagers 118 in der Form eines Wälzlagers im Getriebegehäuseabschnitt 54 gelagert, wobei der Zwischendeckel 60 einen Außenring des Lagers 118 auf einem Absatz 120 im Gehäuse 32 hält. Ein Innenring des Lagers 118 ist dabei zu beiden Stirnseiten mit dem zweiten Planetenträger 116 an mehreren über dem Umfang verteilten Punkten verstemmt, was in den Fig. 3, 9, 10, 13, 14 und 16 exemplarisch mit dem Bezugszeichen 122 angezogen ist, wodurch der zweite Planetenträger 116 im Getriebegehäuseabschnitt 54 über das Lager 118 in axialer Richtung gehalten ist.

Insoweit ist für den Fachmann ersichtlich, dass eine Drehung der Abtriebswelle 90 des Elektromotors 36 in der ersten Getriebestufe 94 über das erste Sonnenritzel 102, die ersten Planetenräder 104 und die Zylinderstifte 106 untersetzt auf den ersten Planetenträger 108 übertragen wird, weil das Hohlrad 98 mit seiner Verzahnung 100 gehäusefest ist. Der erste Planetenträger 108 hingegen dreht das damit einstückig verbundene zweite Sonnenritzel 110 der zweiten Getriebestufe 96, dessen Drehung über die sich ebenfalls am Hohlrad 98 abwälzenden zweiten Planetenräder 112 und die Zylinderstifte 114 weiter untersetzt auf den zweiten Planetenträger 116 übertragen wird. Da das Planetengetriebe 92 zweistufig ist, drehen sich die Abtriebswelle 90 des Elektromotors 36 und der zweite Planetenträger 116 gleichsinnig um die Drehachse R. Das Gesamtübersetzungsverhältnis kann hierbei in einem Bereich zwischen ca. 12:1 und 30:1, beispielsweise bei 24:1 liegen, d.h. 24 Umdrehungen der Abtriebswelle 90 des Elektromotors 36 bewirken in diesem Beispiel über das zweistufige Planetengetriebe 92 eine (Zahlwort) Umdrehung des zweiten Planetenträgers 116. Da sich die Gesamtübersetzung mehrstufiger Getriebe durch Multiplikation der Übersetzungen der einzelnen Getriebestufen ergibt, kann für jede der Getriebestufen 94, 96 ein sinnvoller Übersetzungsbereich zwischen ca. 3:1 und 10:1 gewählt werden, so dass die Sonnenritzel und Planetenräder nicht sehr klein sind und gut aus Hochleistungskunststoffen hergestellt werden können.

Bei der vorerwähnten zweiten Baugruppe des Getriebemechanismus 34, mittels der die Drehbewegung des Planetengetriebes 92 in die Axialbewegung der Betätigungsstange 38 umgesetzt wird, handelt es sich im vorliegenden Ausführungsbeispiel um einen Exzentertrieb mit einer Kurbelwange 124, an der die Betätigungsstange 38 exzentrisch angelenkt ist. Hierbei bildet der zweite Planetenträger 116 des Planetengetriebes 92 zugleich die Kurbelwange 124 aus. Wie am besten in den Fig. 13, 14 und 16 zu sehen ist, ist ein Zylinderstift 126 exzentrisch zur Drehachse R an dem zweiten Planetenträger 116 angebracht, z.B. mittels einer Pressverbindung, so dass der Zylinderstift 126 auf der vom Planetengetriebe 92 abgewandten Seite von dem zweiten Planetenträger 116 vorsteht.

Auf dem Zylinderstift 126 sind, z.B. in Fig. 16 von oben nach unten gesehen, eine Anlaufscheibe 128, ein sphärisches Lagerteil 130 und ein Halter 132 für das Signalelement 70 (Magnet) der Sensoranordnung 66 - sämtliche Teile aus Kunststoff - aufgesteckt und mittels eines Sicherungsrings 134 an dem in Fig. 16 unteren Ende des Zylinderstifts 126 gesichert. Der Halter 132 ist an dem sphärischen Lagerteil 130 - welches insbesondere für Montagezwecke ein geringfügiges Verschwenken der Betätigungsstange 38 aus der Zeichnungsebene der Fig. 13 und 14 gestattet - formschlüssig gegen ein Verdrehen bezüglich des sphärischen Lagerteils 130 gesichert, wie in Fig. 16 zu erkennen ist, während das sphärische Lagerteil 130 gemäß den Fig. 13 und 14 seinerseits an einem Lagerauge 136 der Betätigungsstange 38 formschlüssig gegen ein Verdrehen bezüglich des Lagerauges 136 gesichert ist. Das auf dem sphärischen Lagerteil 130 aufgeklipste Lagerauge 136 besteht ebenfalls aus Kunststoff und ist auf einen metallischen Stangenkern 138 der Betätigungsstange 38 aufgespritzt. Somit folgt der Halter 132 für das Signalelement 70 stets mit der Betätigungsstange 38 ausgefluchtet einer schwenkenden Hin- und Herbewegung der Betätigungsstange 38 um den Zylinderstift 126, der seinerseits bei einer Drehung der Kurbelwange 124 um die Drehachse R kreist. Im Ergebnis ist die jeweilige Stellung der Betätigungsstange 38 infolge der bewirkten Relativbewegung zwischen dem Sensorelement 68 und dem Signalelement 70, das im Bereich der exzentrischen Anlenkung der Betätigungsstange 38 an der Kurbelwange 124 mit der Betätigungsstange 38 verbunden ist, mittels der Sensoranordnung 66 durch den Zwischendeckel 60 hindurch gut zu erfassen.

Weitere Details zur Betätigungsstange 38 und deren Vorspannung sind insbesondere den Fig. 1, 2, 13, 14 und 16 zu entnehmen. Demgemäß ist der Stangenkern 138 der Betätigungsstange 38 im Wesentlichen mittig mit einem Bund 140 versehen, der eine doppelte Widerlagerfunktion erfüllt. Zum einen bildet der Bund 140 ein Widerlager für einen metallischen Federteller 142 aus, auf dem sich das Federelement 40 stangenseitig abstützt, während sich das Federelement 40 über einen in der Öffnung 82 des Flansches 80 aufgenommenen Zentrierring 144 aus Kunststoff gehäuseseitig abstützt. Das Federelement 40 spannt somit die Betätigungsstange 38 in der Sperrrichtung S vor. Zum anderen bildet der Bund 140 ein Widerlager für eine Nachrückfeder 146 in Form einer Schraubendruckfeder aus, deren an sich bekannte Funktion schon eingangs beschrieben wurde. Die Nachrückfeder 146 ist auf der von dem Federelement 40 abgewandten Seite des Bunds 140 auf den Stangenkern 138 aufgesteckt und spannt das auf dem Stangenkern 138 axialbeweglich geführte Betätigungselement 26 in Sperrrichtung S gegen einen am freien Ende des Stangenkerns 138 ausgebildeten Anschlag 148 vor.

Zu weiteren Einzelheiten des Sperrmechanismus 42 sei zunächst auf die Fig. 3, 4 und 16 verwiesen. Demgemäß ist die Sperrscheibe 46 des Sperrmechanismus 42 axial zwischen der ersten Getriebestufe 94 und der zweiten Getriebestufe 96 angeordnet, genauer gesagt zwischen dem ersten Planetenträger 108 der ersten Getriebestufe 94 und den zweiten Planetenrädern 112 der zweiten Getriebestufe 96. Hierbei ist die Sperrscheibe 46 drehfest mit dem zweiten Planetenträger 116 der zweiten Getriebestufe 96 gekoppelt, und zwar über die die zweiten Planetenräder 112 lagernden Zylinderstifte 114, die in den Fig. 3, 4 und 16 nach oben über die zweiten Planetenräder 112 überstehen und dort in jeweils zugeordneten Bohrungen 150 in der Sperrscheibe 46 eingreifen - siehe hierzu insbesondere die Fig. 7 und 8. In diesen Figuren ist auch gut zu erkennen, dass die Sperrscheibe 46 ringförmig ist, mit einer zentralen Öffnung 152 für den Durchtritt des zweiten Sonnenritzels 110 der zweiten Getriebestufe 96.

Gemäß den Fig. 7, 8 und 17 ist die mit der Arretiereinrichtung 44 zusammenwirkende Kontur 48 des Sperrmechanismus 42 am Außenumfang der Sperrscheibe 46 ausgebildet. Wie insbesondere die Vergrößerung gemäß Fig. 17 zeigt, besitzt die Anschlagfläche 50 der Kontur 48 hierbei bezogen auf die Drehachse R der Sperrscheibe 46 eine radial innere Kante 154 und eine radial äußere Kante 156. Über dem Umfang der Sperrscheibe 46 gesehen verläuft die Kontur 48 zwischen der radial inneren Kante 154 und der radial äußeren Kante 156 wenigstens teilweise in der Form einer archimedischen Spirale.

Wie weiter oben schon erwähnt handelt es sich bei der mit der Kontur 48 der Sperrscheibe 46 zusammenwirkenden Arretiereinrichtung 44 um einen Hubmagneten. Dieser hat ein Hubmagnetgehäuse 158, das gemäß den Fig. 2 bis 6, 11 und 12 mittels Befestigungsschrauben 160 und geeignet abgedichtet an dem Anschlussbereich 72 des Getriebegehäuseabschnitts 54 befestigt ist. In dem Hubmagnetgehäuse 158 ist gemäß insbesondere den Fig. 3, 4, 7 und 8 in an sich bekannter Weise ein von einer gehäusefesten Spule 162 umgebener, axialbeweglicher Tauchkern 164 aufgenommen. An dem Tauchkern 164 ist ein Zylinderstift 166 angebracht, der ein der Kontur 48 der Sperrscheibe 46 gegenüberliegendes Kontaktende 168 ausbildet, welches durch eine zugeordnete Öffnung 170 im Getriebegehäuseabschnitt 54 in dieses hinein vorsteht, um mit der Kontur 48 in Kontakt zu gelangen. Ferner ist eine Vorspannfeder 172 vorgesehen, die den Tauchkern 164 in Richtung der Kontur 48 vorgespannt. Demgemäß liegt das Kontaktende 168 in einem unbestromten Zustand der Spule 162 an der Kontur 48 an, so dass es mit der Anschlagfläche 50 der Kontur 48 in Eingriff zu kommen vermag, während das Kontaktende 168 in einem bestromten Zustand der Spule 162 gegen die Kraft der Vorspannfeder 172 von der Kontur 48 weggezogen ist, um deren Anschlagfläche 50 freizugeben. Diese Axialbewegung des Tauchkerns 164 ist in den Fig. 3, 4 und 7 bis 10 mit dem Doppelpfeil A angedeutet.

Die um die Drehachse R vorzusehenden Winkellagen der Anschlagfläche 50 der Kontur 48 einerseits und des Zylinderstifts 126 zur exzentrischen Anlenkung der Betätigungsstange 38 an der Kurbelwange 124 andererseits sind so aufeinander abgestimmt (siehe die Fig. 7 und 13), dass, wenn das Kontaktende 168 der Arretiereinrichtung 44 an der Anschlagfläche 50 der Kontur 48 anliegt, wie in Fig. 7 gezeigt, sich der Zylinderstift 126 an der Kurbelwange 124 nahe seines in Fig. 13 unteren Umkehrpunkts befindet, und zwar in der ersten Drehrichtung D1 gesehen vor dem Umkehrpunkt. Hierdurch vermag die Betätigungsstange 38 infolge der Kraft des vorgespannten Federelements 40 über den Zylinderstift 126 an der Kurbelwange 124 ein Drehmoment in der zweiten Drehrichtung D2 aufzubringen. Wird ausgehend von dieser Position die Anschlagfläche 50 der Kontur 48 im Notbetrieb des Parksperrenaktuators 10 durch Bestromung der Arretiereinrichtung 44 von deren Kontaktende 168 freigegeben, dreht die Kurbelwange 124 und damit die Sperrscheibe 46 unter der gespeicherten Kraft des Federelements 40 in der zweiten Drehrichtung D2, wobei sich die Betätigungsstange 38 aus ihrer Entsperrstellung gemäß Fig. 13 in der Sperrrichtung S in ihre Sperrstellung gemäß Fig. 14 bewegt. Damit bei dieser Bewegung der Elektromotor 36 nicht mitgedreht werden muss, kann an der Abtriebswelle 90 des Elektromotors 36 ein entsprechender Freilauf (nicht dargestellt) vorgesehen sein. Im Normalbetrieb des Parksperrenaktuators 10 hingegen bewirkt die Rotation des Elektromotors über den Getriebemechanismus 34 eine Drehung der Kurbelwange 124 und damit der Sperrscheibe 46 in der ersten Drehrichtung D1. Die ausgehend von der radial inneren Kante 154 der Anschlagfläche 50 in Umfangsrichtung der Sperrscheibe 46 gesehen zu der radial äußeren Kante 156 der Anschlagfläche 50 hin sanft ansteigende Kontur 48 schiebt hierbei den Tauchkern 164 der Arretiereinrichtung 44 über dessen Kontaktende 168 gegen die Kraft der Vorspannfeder 172 in den Fig. 7 und 8 nach links weg. Mit Überfahren der Anschlagfläche 50 wird das Kontaktende 168 des Tauchkerns 164 unter der Kraft der Vorspannfeder 172 wieder auf die Kontur 48 zurückgeschoben. Die Anschlagfläche 50 kann demnach in der ersten Drehrichtung D1 keine die Sperrscheibe 46 arretierende Wirkung entfalten, wohl aber in der zweiten Drehrichtung D2.

Es ist ersichtlich, dass im Normalbetrieb des Parksperrenaktuators 10 die Betätigungsstange 38 vermittels des Elektromotors 36 mit Unterstützung der Kraft des Federelements 40 in seine Sperrstellung verbracht werden kann. Für den Notbetrieb ist das Federelement 40 vorgespannt und der Getriebemechanismus 34 mittels des Sperrmechanismus 42 und der zugeordneten Arretiereinrichtung 44 gesperrt. In der zweiten Drehrichtung D2 verhindert die Anschlagfläche 50 ein Drehen des Getriebemechanismus 34 unter der Kraft des Federelements 40. In der ersten Drehrichtung D1 kann der Getriebemechanismus 34 nicht selbsttätig drehen, weil sich die Kurbelwange 124 in der ersten Drehrichtung D1 gesehen vor ihrem Umkehrpunkt befindet, weshalb das Federelement 40 in der zweiten Drehrichtung D2 wirkt und die Anschlagfläche 50 gegen die Arretiereinrichtung 44 drückt. Es bedarf nunmehr lediglich einer Bestromung der Arretiereinrichtung 44, um die Anschlagfläche 50 freizugeben und damit eine Drehung des Getriebemechanismus 34 in der zweiten Drehrichtung D2 zu ermöglichen, worauf das Federelement 40 die Betätigungsstange 38 in seine Sperrstellung schiebt. Für die Rückbewegung der Betätigungsstange 38 in ihre Entsperrstellung ist der Elektromotor 36 notwendig, der den Getriebemechanismus 34 in der ersten Drehrichtung D1 antreibt, um die Betätigungsstange 38 zurückzuziehen und dabei auch das Federelement 40 wieder zu spannen.

In Fig. 17 ist schließlich noch dargestellt, dass die Anschlagfläche 50 der Kontur 48 an der Sperrscheibe 46 bezogen auf eine durch die Drehachse R der Sperrscheibe 46 verlaufende radiale Ebene geringfügig geneigt verläuft, so dass die radial innere Kante 154 der Anschlagfläche 50 in Richtung der ersten Drehrichtung D1 der Sperrscheibe 46 gesehen vor der radial äußere Kante 156 der Anschlagfläche 50 liegt. Der entsprechende Neigungswinkel α der Anschlagfläche 50 kann beispielsweise zwischen 3° und 4° betragen. Diese Neigung der Anschlagfläche 50 erleichtert das Wegziehen des Kontaktendes 168 des Tauchkerns 164 von der Kontur 48, wenn die Arretiereinrichtung 44 bestromt wird, um die Anschlagfläche 50 freizugeben.

Ein elektrischer Parksperrenaktuator hat einen in einem Gehäuse aufgenommenen Getriebemechanismus, der mittels eines Elektromotors drehend antreibbar ist und dazu dient, eine Drehbewegung in eine Axialbewegung einer mit dem Getriebemechanismus wirkverbundenen, ein Betätigungselement für die Parksperre tragenden Betätigungsstange umzusetzen. Letztere ist in einem Normalbetrieb über den Getriebemechanismus elektromotorisch von einer Entsperrstellung in eine Sperrstellung und umgekehrt verlagerbar und mittels eines Federelements in Richtung der Sperrstellung vorgespannt. Ein Sperrmechanismus dient dazu, die Betätigungsstange in ihrer Entsperrstellung gegen die Kraft des als Energiespeicher wirkenden Federelements zu halten, und besitzt hierfür in sehr kompakter Bauweise eine mit dem Getriebemechanismus antriebsverbundene Sperrscheibe mit einer Kontur, die in nur einer Drehrichtung der Sperrscheibe eine Anschlagfläche für eine Arretiereinrichtung ausbildet. Für einen Notbetrieb ist die Anschlagfläche durch die Arretiereinrichtung freigebbar, so dass sich die Betätigungsstange infolge der Kraft des Federelements ohne elektromotorische Unterstützung in die Sperrstellung bewegt.

### BEZUGSZEICHENLISTE

- 10: Parksperrenaktuator
- 12: Parksperre
- 14: Parksperrenrad
- 16: Verzahnung
- 18: Sperrklinke
- 20: Schwenkachse
- 22: Verriegelungszahn
- 24: Bohrung
- 26: Betätigungselement
- 28: konischer Flächenabschnitt
- 30: Konusführungselement
- 32: Gehäuse
- 34: Getriebemechanismus
- 36: Elektromotor
- 38: Betätigungsstange
- 40: Federelement
- 42: Sperrmechanismus
- 44: Arretiereinrichtung
- 46: Sperrscheibe
- 48: Kontur
- 50: Anschlagfläche
- 52: Gehäusebasis
- 54: Getriebegehäuseabschnitt
- 56: Motorgehäuse
- 58: Außendeckel
- 60: Zwischendeckel
- 62: Elektronikmodul
- 64: Schnittstellenbaustein
- 66: Sensoranordnung
- 68: Sensorelement
- 70: Signalelement
- 72: Anschlussbereich
- 74: Elektroanschluss
- 76: Elektroanschluss
- 78: Verbindungsabschnitt
- 80: Flansch
- 82: zentrale Öffnung
- 84: zentrale Öffnung
- 86: Befestigungsflansch
- 88: Radialwellendichtring
- 90: Abtriebswelle
- 92: Planetengetriebe
- 94: erste Getriebestufe
- 96: zweite Getriebestufe
- 98: Hohlrad
- 100: gerade Verzahnung
- 102: erstes Sonnenritzel
- 104: erste Planetenräder
- 106: Zylinderstifte
- 108: erster Planetenträger
- 110: zweites Sonnenritzel
- 112: zweite Planetenräder
- 114: Zylinderstifte
- 116: zweiter Planetenträger
- 118: Lager
- 120: Absatz
- 122: Verstemmung
- 124: Kurbelwange
- 126: Zylinderstift
- 128: Anlaufscheibe
- 130: sphärisches Lagerteil
- 132: Halter
- 134: Sicherungsring
- 136: Lagerauge
- 138: Stangenkern
- 140: Bund
- 142: Federteller
- 144: Zentrierring
- 146: Nachrückfeder
- 148: Anschlag
- 150: Bohrung
- 152: zentrale Öffnung
- 154: radial innere Kante
- 156: radial äußere Kante
- 158: Hubmagnetgehäuse
- 160: Befestigungsschraube
- 162: Spule
- 164: Tauchkern
- 166: Zylinderstift
- 168: Kontaktende
- 170: Öffnung
- 172: Vorspannfeder

- α: Neigungswinkel

- A: Axialbewegung
- D1: erste Drehrichtung
- D2: zweite Drehrichtung
- E: Entsperrrichtung
- R: Drehachse
- S: Sperrrichtung

## Patentansprüche

1. Elektrischer Parksperrenaktuator (10) zur Betätigung einer Parksperre (12) in einem Kraftfahrzeug, mit
einem Gehäuse (32),
einem Getriebemechanismus (34), der in dem Gehäuse (32) aufgenommen und mittels eines Elektromotors (36) drehend antreibbar ist,
einer Betätigungsstange (38), die mit dem Getriebemechanismus (34) wirkverbunden ist und ein Betätigungselement (26) für die Parksperre (12) trägt, wobei der Getriebemechanismus (34) dazu dient, eine Drehbewegung in eine Axialbewegung der Betätigungsstange (38) umzusetzen, so dass die Betätigungsstange (38) von einer Entsperrstellung in eine Sperrstellung und umgekehrt verlagerbar ist,
einem Federelement (40), das die Betätigungsstange (38) in Richtung der Sperrstellung vorgespannt,
einem Sperrmechanismus (42), der dazu dient, die Betätigungsstange (38) in ihrer Entsperrstellung gegen die Kraft des Federelements (40) zu halten, und
einer Arretiereinrichtung (44), mittels der der Sperrmechanismus (42) freigebbar ist,
wobei die Betätigungsstange (38) in einem Normalbetrieb des Parksperrenaktuators (10) über den mittels des Elektromotors (36) angetriebenen Getriebemechanismus (34) verlagerbar ist, und
wobei der Sperrmechanismus (42) für einen Notbetrieb des Parksperrenaktuators (10) wahlweise mittels der Arretiereinrichtung (44) freigebbar ist, so dass sich die Betätigungsstange (38) infolge der Kraft des Federelements (40) ohne Unterstützung durch den Elektromotor (36) in die Sperrstellung bewegt,
wobei der Sperrmechanismus (42) eine Sperrscheibe (46) aufweist, die mit dem Getriebemechanismus (34) antriebsverbunden ist und eine mit der Arretiereinrichtung (44) zusammenwirkende Kontur (48) besitzt,
wobei im Normalbetrieb des Parksperrenaktuators (10)
die Sperrscheibe (46) mittels des Elektromotors (36) in einer ersten Drehrichtung (D1) antreibbar ist, **dadurch gekennzeichnet, dass** die Kontur (48) der Sperrscheibe (46) in der ersten Drehrichtung (D1) ein von der Arretiereinrichtung (44) unabhängiges Verdrehen der Sperrscheibe (46) gestattet und
die Kontur (48) der Sperrscheibe (46) in einer zweiten, entgegengesetzten Drehrichtung (D2) eine Anschlagfläche (50) ausbildet, die gegen die Arretiereinrichtung (44) zur Anlage bringbar ist und somit ein Verdrehen der Sperrscheibe (46) in der zweiten Drehrichtung (D2) verhindert, wenn die Sperrscheibe (46) eine Verdrehstellung einnimmt, in der sich die Betätigungsstange (38) in ihrer Entsperrstellung befindet, und
wobei im Notbetrieb des Parksperrenaktuators (10)
die Anschlagfläche (50) durch die Arretiereinrichtung (44) freigebbar ist, so dass sich die Sperrscheibe (46) in der zweiten Drehrichtung (D2) verdreht,
während sich die Betätigungsstange (38) unter der Kraft des Federelements (40) in die Sperrstellung bewegt.

2. Parksperrenaktuator (10) nach Anspruch 1, **dadurch gekennzeichnet, dass** der Getriebemechanismus (34) ein Planetengetriebe (92) umfasst, das die mittels des Elektromotors (36) erzeugte Antriebsdrehzahl des Planetengetriebes (92) in eine geringere Abtriebsdrehzahl des Planetengetriebes (92) wandelt.

3. Parksperrenaktuator (10) nach Anspruch 2, **dadurch gekennzeichnet, dass** das Planetengetriebe (92) zweistufig ausgebildet ist, mit einer ersten Getriebestufe (94) und einer zweiten Getriebestufe (96).

4. Parksperrenaktuator (10) nach Anspruch 3, **dadurch gekennzeichnet, dass** die Sperrscheibe (46) zwischen der ersten Getriebestufe (94) und der zweiten Getriebestufe (96) angeordnet ist.

5. Parksperrenaktuator (10) nach einem der Ansprüche 2 bis 4, **dadurch gekennzeichnet, dass** das Planetengetriebe (92) ein Hohlrad (98) aufweist, welches einstückig mit dem Gehäuse (32) aus Kunststoff spritzgegossen ist.

6. Parksperrenaktuator (10) nach einem der Ansprüche 2 bis 5, **dadurch gekennzeichnet, dass** das Planetengetriebe (92) Planetenräder (104, 112) aus Kunststoff besitzt, die mit geraden Verzahnungen versehen sind.

7. Parksperrenaktuator (10) nach einem der vorhergehenden Ansprüche, **dadurch gekennzeichnet, dass** der Getriebemechanismus (34) eine Kurbelwange (124) aufweist, an der die Betätigungsstange (38) exzentrisch angelenkt ist, um die Drehbewegung in die Axialbewegung umzusetzen.

8. Parksperrenaktuator (10) nach wenigstens den Ansprüchen 2 und 7, **dadurch gekennzeichnet, dass** ein Planetenträger (116) des Planetengetriebes (92) die Kurbelwange (124) ausbildet.

9. Parksperrenaktuator (10) nach einem der vorhergehenden Ansprüche, **dadurch gekennzeichnet, dass** die Kontur (48) am Außenumfang der Sperrscheibe (46) ausgebildet ist und die Anschlagfläche (50) der Kontur (48) bezogen auf eine Drehachse (R) der Sperrscheibe (46) eine radial innere Kante (154) und eine radial äußere Kante (156) aufweist, wobei die Kontur (48) über dem Umfang der Sperrscheibe (46) gesehen zwischen der radial inneren Kante (154) und der radial äußeren Kante (156) wenigstens teilweise in der Form einer archimedischen Spirale verläuft.

10. Parksperrenaktuator (10) nach Anspruch 9, **dadurch gekennzeichnet, dass** die Anschlagfläche (50) der Kontur (48) bezogen auf eine durch die Drehachse (R) der Sperrscheibe (46) verlaufende radiale Ebene geringfügig geneigt verläuft, so dass die radial innere Kante (154) der Anschlagfläche (50) in Richtung der ersten Drehrichtung (D1) der Sperrscheibe (46) gesehen vor der radial äußeren Kante (156) der Anschlagfläche (50) liegt.

11. Parksperrenaktuator (10) nach einem der vorhergehenden Ansprüche, **dadurch gekennzeichnet, dass** es sich bei der Arretiereinrichtung (44) um einen Hubmagneten handelt, mit einem von einer gehäusefesten Spule (162) umgebenen, axialbeweglichen Tauchkern (164), der ein der Kontur (48) der Sperrscheibe (46) gegenüberliegendes Kontaktende (168) aufweist und mittels einer Vorspannfeder (172) in Richtung der Kontur (48) vorgespannt ist, wobei das Kontaktende (168) in einem unbestromten Zustand der Spule (162) an der Kontur (48) anliegt, so dass es mit der Anschlagfläche (50) der Kontur (48) in Eingriff zu kommen vermag, und in einem bestromten Zustand der Spule (162) gegen die Kraft der Vorspannfeder (172) von der Kontur (48) weggezogen ist, um deren Anschlagfläche (50) freizugeben.

12. Parksperrenaktuator (10) nach einem der vorhergehenden Ansprüche, **dadurch gekennzeichnet, dass** das Gehäuse (32) einstückig mit einem Flansch (80) zur Befestigung an einem Getriebegehäuse versehen ist, der eine zentrale Öffnung (82) aufweist, durch welche sich die das Betätigungselement (26) tragende Betätigungsstange (38) und das Federelement (40) nach außen hindurch erstrecken.

13. Parksperrenaktuator (10) nach einem der vorhergehenden Ansprüche, **dadurch gekennzeichnet, dass** in dem Gehäuse (32) ein Elektronikmodul (62) integriert ist, das wenigstens eine für die Ansteuerung des Elektromotors (36) erforderliche Elektronik und einen Schnittstellenbaustein (64) zur elektrischen Kontaktierung des Parksperrenaktuators (10) umfasst, wobei der Getriebemechanismus (34) in dem Gehäuse (32) durch einen Zwischendeckel (60) von dem Elektronikmodul (62) getrennt ist, das seinerseits zur Umgebung hin mittels eines am Gehäuse (32) befestigten Außendeckels (58) abgedichtet ist.

14. Parksperrenaktuator (10) nach Anspruch 13, **dadurch gekennzeichnet, dass** der Zwischendeckel (60) auch ein Lager (118) im Gehäuse (32) hält, mittels dessen ein Teil des Getriebemechanismus (34) gegenüber dem Gehäuse (32) drehbar gelagert ist.

15. Parksperrenaktuator (10) nach wenigstens den Ansprüchen 7 und 13, **dadurch gekennzeichnet, dass** in dem Gehäuse (32) auch eine Sensoranordnung (66) zur Positionserfassung der Betätigungsstange (38) integriert ist, mit einem im Elektronikmodul (62) vorgesehenen Sensorelement (68) und einem Signalelement (70), das im Bereich der exzentrischen Anlenkung der Betätigungsstange (38) an der Kurbelwange (124) mit der Betätigungsstange (38) oder der Kurbelwange (124) verbunden und mittels des Sensorelements (68) durch den Zwischendeckel (60) hindurch detektierbar ist, um zumindest die Entsperrstellung und die Sperrstellung der Betätigungsstange (38) zu erfassen.

## Claims

1. Electric parking brake actuator (10) for actuation of a parking brake (12) in a motor vehicle, comprising
a housing (32),
a transmission mechanism (34) which is accommodated in the housing (32) and which is rotationally drivable by means of an electric motor (36),
an actuating rod (38) which is operatively connected with the transmission mechanism (34) and which carries an actuating element (26) for the parking brake (12), wherein the transmission mechanism (34) serves the purpose of conversion of a rotational movement into an axial movement of the actuating rod (38) so that the actuating rod (38) is displaceable from an unblocking position to a blocking position and conversely,
a spring element (40) which biases the actuating rod (38) in the direction of the blocking position,
a blocking mechanism (42) which serves the purpose of holding the actuating rod (38) in the unblocking position of the actuating rod against the force of the spring element (40), and
a locking device (44) by means of which the blocking mechanism (42) is releasable,
wherein in a normal operation of the parking brake actuator (10) the actuating rod (38) is displaceable via the transmission mechanism (34) driven by means of the electro motor (36), and
wherein the blocking mechanism (42) for an emergency operation of the parking brake actuator (10) is selectably releasable by means of the locking device (44) so that the actuating rod (38) as a consequence of the force of the spring element (40) moves into the blocking position without assistance by the electric motor (36),
wherein the blocking mechanism (42) comprises a blocking disc (46) which is in drive connection with the transmission mechanism (34) and which has a profile (48) co-operating with the locking device (44),
wherein in normal operation of the parking brake actuator (10)
the blocking disc (46) can be driven by means of the electric motor (36) in a first direction (D1) of rotation,
**characterized in that** the profile (48) of the blocking disc (46) in the first direction (D1) of rotation allows rotation of the blocking disc (46) independently of the locking device (44) and
the profile (48) of the blocking disc (46) in a second, opposite direction (D2) of rotation forms a stop surface (50) which is able to be brought into contact with the locking device (44) and which thus prevents rotation of the blocking disc (46) in the second direction (D2) of rotation when the blocking disc (46) adopts a rotational position in which the actuating rod (38) is disposed in the unblocking position of the actuating rod, and
wherein in emergency operation of the parking brake actuator (10)
the stop surface (50) is releasable by the locking device (44) so that the blocking disc (46) rotates in the second direction (D2) of rotation,
whilst the actuating rod (38) under the force of the spring element (40) moves into the blocking position.

2. Parking brake actuator (10) according to claim 1, **characterized in that** the transmission mechanism (34) comprises a planetary transmission (92) which converts the drive input rotational speed of the planetary transmission (92) generated by means of the electric motor (36) into a lower drive output rotational speed of the planetary transmission (92).

3. Parking brake actuator (10) according to claim 2, **characterized in that** the planetary transmission (92) is of two-stage configuration with a first transmission stage (94) and a second transmission stage (96).

4. Parking brake actuator (10) according to claim 3, **characterized in that** the blocking disc (46) is arranged between the first transmission stage (94) and the second transmission stage (96).

5. Parking brake actuator (10) according to any one of claims 2 to 4, **characterized in that** the planetary transmission (92) comprises a ring gear (98) integrally injection-molded with the housing (32) from plastics material.

6. Parking brake actuator (10) according to any one of claims 2 to 5, **characterized in that** the planetary transmission (92) has planetary wheels (104, 112) of plastics material, the wheels being provided with straight toothings.

7. Parking brake actuator (10) according to any one of the preceding claims, **characterized in that** the transmission mechanism (34) comprises a crank arm (124) to which the actuating rod (38) is eccentrically coupled so as to convert the rotational movement into the axial movement.

8. Parking brake actuator (10) according to at least claims 2 and 7, **characterized in that** a planetary carrier (116) of the planetary transmission (92) forms the crank arm (124).

9. Parking brake actuator (10) according to any one of the preceding claims, **characterized in that** the profile (48) is formed at the outer circumference of the blocking disc (46) and the stop surface (50) of the profile (48) has with respect to an axis (R) of rotation of the blocking disc (46) a radially inner edge (154) and a radially outer edge (156), wherein the profile (48) extends at least partly in the form of an Archimedean spiral between the radially inner edge (154) and the radially outer edge (156) as seen over the circumference of the blocking disc (46).

10. Parking brake actuator (10) according to claim 9, **characterized in that** the stop surface (50) of the profile (48) extends at a slight inclination with respect to a radial plane extending through the axis (R) of rotation of the blocking disc (46) so that the radially inner edge (154) of the stop surface (50) lies in front of the radially outer edge (156) of the stop surface (50) as seen in the sense of the first direction (D1) of rotation of the blocking disc (46).

11. Parking brake actuator (10) according to any one of the preceding claims, **characterized in that** the locking device (44) is a solenoid with an axially movable plunger (164) which is surrounded by a coil (162) fixed relative to the housing and which has a contact end (168) facing the profile (48) of the blocking disc (46) and is biased in the direction of the profile (48) by means of a biasing spring (172), wherein the contact end (168) bears against the profile (48) in a deenergized state of the coil (162) so that the end is capable of coming into engagement with the stop surface (50) of the profile (48) and in an energized state of the coil (162) is drawn away from the profile (48) against the force of the biasing spring (172) so as to release the stop surface (50) of the profile.

12. Parking brake actuator (10) according to any one of the preceding claims, **characterized in that** the housing (32) is provided integrally with a flange (80) for securing to a transmission casing, the flange having a central opening (82) through which the actuating rod (38), which carries the actuating element (26), and the spring element (40) extend outwardly.

13. Parking brake actuator (10) according to any one of the preceding claims, **characterized in that** an electronic module (62) comprising at least an electronic system required for activation of the electric motor (36) and an interface module (64) for electrical contact-making of the parking brake actuator (10) is integrated in the housing (32), wherein the transmission mechanism (34) in the housing (32) is separated by an intermediate cover (60) from the electronic module (62) which in turn is sealed off from the environment by means of an outer cover (58) secured to the housing (32).

14. Parking brake actuator (10) according to claim 13, **characterized in that** the intermediate cover (60) also holds in the housing (32) a bearing (118) by means of which a part of the transmission mechanism (34) is mounted to be rotatable relative to the housing (32).

15. Parking brake actuator (10) according to at least claims 7 and 13, **characterized in that** a sensor arrangement (66) for positional detection of the actuating rod (38) is also integrated in the housing (32), the sensor arrangement comprising a sensor element (68) which is provided in the electronic module (62), and a signal element (70) which is connected with the actuating rod (38) or the crank arm (124) in the region of the eccentric coupling of the actuating rod (38) to the crank arm (124) and which is detectable by means of the sensor element (68) through the intermediate cover (60) so as to detect at least the unblocking position and the blocking position of the actuating rod (38).

## Revendications

1. Actionneur de frein de stationnement (10) électrique pour l'actionnement d'un frein de stationnement (12) dans un véhicule à moteur, avec
un carter (32),
un mécanisme de transmission (34), qui est logé dans le carter (32) et peut être entraîné en rotation au moyen d'un moteur électrique (36),
une tige d'actionnement (38), qui est en liaison fonctionnelle avec le mécanisme de transmission (34) et porte un élément d'actionnement (26) pour le frein de stationnement (12), dans lequel le mécanisme de transmission (34) sert à convertir un mouvement rotatif en un mouvement axial de la tige d'actionnement (38), de sorte que la tige d'actionnement (38) est déplaçable d'une position de déblocage dans une position de blocage et inversement,
un élément ressort (40), qui précontraint la tige d'actionnement (38) en direction de la position de blocage,
un mécanisme de blocage (42), qui sert à retenir la tige d'actionnement (38) dans sa position de déblocage à l'encontre de la force de l'élément ressort (40), et
un dispositif d'arrêt (44), au moyen duquel le mécanisme de blocage (42) peut être libéré,
dans lequel la tige d'actionnement (38), dans un fonctionnement normal de l'actionneur de frein de stationnement (10), est déplaçable par l'intermédiaire du mécanisme de transmission (34) entraîné au moyen du moteur électrique (36), et
dans lequel le mécanisme de blocage (42), pour un fonctionnement d'urgence de l'actionneur de frein de stationnement (10), peut être libéré sélectivement au moyen du dispositif d'arrêt (44), de sorte que la tige d'actionnement (38) se déplace dans la position de blocage, sans assistance par le moteur électrique (36), grâce à la force de l'élément ressort (40),
dans lequel le mécanisme de blocage (42) présente un disque de blocage (46), qui est en liaison d'entraînement avec le mécanisme de transmission (34) et possède un contour (48) coopérant avec le dispositif d'arrêt (44),
dans lequel, dans le fonctionnement normal de l'actionneur de frein de stationnement (10),
le disque de blocage (46) peut être entraîné au moyen du moteur électrique (36) dans une première direction de rotation (D1),
**caractérisé en ce que**
le contour (48) du disque de blocage (46), dans la première direction de rotation (D1), permet une rotation du disque de blocage (46) indépendante du dispositif d'arrêt (44) et
le contour (48) du disque de blocage (46), dans une deuxième direction de rotation (D2) opposée, réalise une surface de butée (50), qui peut être amenée en appui contre le dispositif d'arrêt (44) et empêche de cette manière une rotation du disque de blocage (46) dans la deuxième direction de rotation (D2), lorsque le disque de blocage (46) occupe une position de rotation dans laquelle la tige d'actionnement (38) se trouve dans sa position de déblocage, et
dans lequel, dans le fonctionnement d'urgence de l'actionneur de frein de stationnement (10),
la surface de butée (50) peut être libérée par le dispositif d'arrêt (44), de sorte que le disque de blocage (46) tourne dans la deuxième direction de rotation (D2),
pendant que la tige d'actionnement (38) se déplace dans la position de blocage sous la force de l'élément ressort (40).

2. Actionneur de frein de stationnement (10) selon la revendication 1, **caractérisé en ce que** le mécanisme de transmission (34) comprend une boîte de vitesses à trains épicycloïdaux (92), qui convertit la vitesse d'entraînement de la boîte de vitesses à trains épicycloïdaux (92) produite au moyen du moteur électrique (36) en une vitesse de sortie moindre de la boîte de vitesses à trains épicycloïdaux (92).

3. Actionneur de frein de stationnement (10) selon la revendication 2, **caractérisé en ce que** la boîte de vitesses à trains épicycloïdaux (92) est réalisée à deux étages, avec un premier étage de boîte de vitesses (94) et un deuxième étage de boîte de vitesses (96).

4. Actionneur de frein de stationnement (10) selon la revendication 3, **caractérisé en ce que** le disque de blocage (46) est disposé entre le premier étage de boîte de vitesses (94) et le deuxième étage de boîte de vitesses (96).

5. Actionneur de frein de stationnement (10) selon l'une quelconque des revendications 2 à 4, **caractérisé en ce que** la boîte de vitesses à trains épicycloïdaux (92) présente une couronne (98), laquelle est moulée par injection en plastique d'une seule pièce avec le carter (32).

6. Actionneur de frein de stationnement (10) selon l'une quelconque des revendications 2 à 5, **caractérisé en ce que** la boîte de vitesses à trains épicycloïdaux (92) possède des satellites (104, 112) en plastique, qui sont pourvus de dentures droites.

7. Actionneur de frein de stationnement (10) selon l'une quelconque des revendications précédentes, **caractérisé en ce que** le mécanisme de transmission (34) présente un bras de manivelle (124), sur lequel la tige d'actionnement (38) est articulée de manière excentrée, afin de convertir le mouvement de rotation en mouvement axial.

8. Actionneur de frein de stationnement (10) selon au moins les revendications 2 et 7, **caractérisé en ce qu'**un porte-satellite (116) de la boîte de vitesses à trains épicycloïdaux (92) réalise le bras de manivelle (124).

9. Actionneur de frein de stationnement (10) selon l'une quelconque des revendications précédentes, **caractérisé en ce que** le contour (48) est réalisé sur la périphérie extérieure du disque de blocage (46) et la surface de butée (50) du contour (48) présente par rapport à un axe de rotation (R) du disque de blocage (46) un bord radialement intérieur (154) et un bord radialement extérieur (156), dans lequel le contour (48), vu sur la périphérie du disque de blocage (46), s'étend entre le bord radialement intérieur (154) et le bord radialement extérieur (156) au moins en partie sous la forme d'une spirale d'Archimède.

10. Actionneur de frein de stationnement (10) selon la revendication 9, **caractérisé en ce que** la surface de butée (50) du contour (48) s'étend de manière légèrement inclinée par rapport à un plan radial s'étendant à travers l'axe de rotation (R) du disque de blocage (46), de sorte que le bord radialement intérieur (154) de la surface de butée (50) se situe, vu en direction de la première direction de rotation (D1) du disque de blocage (46), devant le bord radialement extérieur (156) de la surface de butée (50).

11. Actionneur de frein de stationnement (10) selon l'une quelconque des revendications précédentes, **caractérisé en ce que** le dispositif d'arrêt (44) est un aimant de levage, avec un noyau plongeur (164) mobile axialement, entouré par une bobine (162) fixée au carter, qui présente une extrémité de contact (168) opposée au contour (48) du disque de blocage (46) et est précontrainte au moyen d'un ressort de précontrainte (172) en direction du contour (48), dans lequel l'extrémité de contact (168), dans un état non alimenté en courant de la bobine (162), s'applique sur le contour (48), de sorte qu'elle peut être en prise avec la surface de butée (50) du contour (48), et, dans un état alimenté en courant de la bobine (162), est retirée du contour (48) à rencontre de la force du ressort de précontrainte (172), afin de libérer la surface de butée (50) de celui-ci.

12. Actionneur de frein de stationnement (10) selon l'une quelconque des revendications précédentes, **caractérisé en ce que** le carter (32) est pourvu d'une seule pièce d'une bride (80) pour la fixation à un carter de transmission, qui présente une ouverture centrale (82) à travers laquelle la tige d'actionnement (38) portant l'élément d'actionnement (26) et l'élément ressort (40) s'étendent vers l'extérieur.

13. Actionneur de frein de stationnement (10) selon l'une quelconque des revendications précédentes, **caractérisé en ce qu'**un module électronique (62), qui comprend au moins une électronique nécessaire à la commande du moteur électrique (36) et un module d'interface (64) pour la mise en contact électrique de l'actionneur de frein de stationnement (10), est intégré dans le carter (32), dans lequel le mécanisme de transmission (34) dans le carter (32) est séparé par un couvercle intermédiaire (60) du module électronique (62), qui est étanchéifié pour sa part vis-à-vis de l'environnement au moyen d'un couvercle extérieur (58) fixé sur le carter (32).

14. Actionneur de frein de stationnement (10) selon la revendication 13, **caractérisé en ce que** le couvercle intermédiaire (60) porte également un palier (118) dans le carter (32), au moyen duquel une partie du mécanisme de transmission (34) est montée en rotation par rapport au carter (32).

15. Actionneur de frein de stationnement (10) selon au moins les revendications 7 et 13, **caractérisé en ce qu'**un ensemble de capteurs (66) destiné à détecter la position de la tige d'actionnement (38) est également intégré dans le carter (32), avec un élément capteur (68) prévu dans le module électronique (62) et un élément de signalisation (70), qui est relié dans la zone de l'articulation excentrée de la tige d'actionnement (38) sur le bras de manivelle (124) à la tige d'actionnement (38) ou au bras de manivelle (124) et peut être détecté au moyen de l'élément capteur (68) à travers le couvercle intermédiaire (60), afin de détecter au moins la position de déblocage et la position de blocage de la tige d'actionnement (38).
